# EUROPÄISCHE PATENTSCHRIFT

(11) **EP 3 681 757 B1**
(45) Veröffentlichungstag und Bekanntmachung des Hinweises auf die Patenterteilung: **05.07.2023**
(21) Anmeldenummer: 18769662.0
(22) Anmeldetag: 13.09.2018
(51) Int. Cl.: B60N 2/28

(54) **KINDERSITZSYSTEM, UMFASSEND EIN SITZELEMENT SOWIE EINE AUF EINEM KRAFTFAHRZEUGSITZ ANBRINGBARE BASIS**
CHILD SEAT SYSTEM, COMPRISING A SEAT ELEMENT AND A BASIS MOUNTABLE ON A MOTOR VEHICLE
SYSTEME DE SIEGE ENFANT, COMPRENANT UN ELEMENT DE SIEGE ET UNE BASE DESTINEE A UN VEHICULE MOTORISE

(30) Priorität: 14.09.2017 DE 202017105584 U
(43) Veröffentlichungstag der Anmeldung: 22.07.2020
(73) Patentinhaber: CYBEX GmbH, 95448 Bayreuth (DE)
(72) Erfinder: RESCH, Manfred, 95448 Bayreuth (DE); ASCHINGER, Stefan, 95448 Bayreuth (DE); PELESKA, Franz, 95448 Bayreuth (DE)
(74) Vertreter: Meissner Bolte Partnerschaft mbB
(86) Internationale Anmeldenummer: PCT/EP2018/074695
(87) Internationale Veröffentlichungsnummer: WO 2019/053102

(56) Entgegenhaltungen:
- EP-A1- 2 295 287
- DE-A1- 19 744 978
- DE-A1-102004 013 800
- DE-U1-202015 104 788
- FR-A1- 2 974 547
- JP-U- H 051 579
- US-A1- 2005 264 064
- US-B1- 7 073 859

## Beschreibung

Die Erfindung betrifft ein Kindersitzsystem, umfassend ein Sitzelement sowie eine auf einem Kraftfahrzeugsitz anbringbare Basis.

Aus DE 20 2016 104 181 U1 und JPH051579 ist ein Kindersitzsystem bekannt, bei dem ein Sitzelement gegenüber einer Basis rotiert werden kann, so dass verschiedene Ausrichtungen (insbesondere eine Vorwärts-Ausrichtung oder Rückwärts-Ausrichtung) eingestellt werden können. Das Kindersitzsystem gemäß diesem Stand der Technik wird hinsichtlich seiner Flexibilität als verbesserungswürdig angesehen.

Es ist daher Aufgabe der Erfindung, ein Kindersitzsystem vorzuschlagen, das in seiner Anwendung vergleichsweise flexibel ist und insbesondere, auf möglichst zuverlässige und sichere Art und Weise, eine Veränderung der Ausrichtung eines Sitzelementes ermöglicht.

Diese Aufgabe wird durch die Merkmale nach Anspruch 1 gelöst.

Gemäß einem ersten Aspekt wird ein Kindersitzsystem vorgeschlagen, umfassend zumindest ein erstes Sitzelement und eine, auf einem Fahrzeugsitz anbringbare, Basis, wobei die Basis ein Sockelelement sowie ein Drehelement aufweist. Vorzugsweise umfasst zumindest das Drehelement mindestens eine Befestigungseinrichtung zur Befestigung des Sitzelementes. Das Drehelement ist vorzugsweise auf dem Sockelelement rotierbar angeordnet (oder anordenbar), derart, dass das Drehelement Drehelement (alleine und/oder zusammen mit dem Sitzelement) gegenüber dem Sockelelement (um einen Drehwinkel) zur Änderung einer Ausrichtung des Sitzelementes rotierbar ist.

Gemäß einem zweiten Aspekt, der insbesondere mit dem ersten Aspekt kombiniert werden kann, wird ein Kindersitzsystem vorgeschlagen, das zumindest ein (insbesondere das obige) erste Sitzelement und eine (insbesondere die obige) auf einem Fahrzeugsitz anbringbare Basis aufweist, wobei das erste Sitzelement in einem auf der Basis montierten Zustand gegenüber der Basis oder einem (insbesondere dem obigen) Sockelelement der Basis von einer ersten Ausrichtung in eine zweite, von der ersten Ausrichtung abweichende, Ausrichtung rotierbar ist, wobei das Sitzelement von der Basis (insbesondere dem obigen Drehelement der Basis) entfernbar ist.

Ein Kerngedanke des ersten Aspekts liegt darin, die Basis zweiteilig (mit einem Sockelelement sowie einem Drehelement) auszubilden, so dass eine Veränderung der Ausrichtung des Kindersitzes durch eine entsprechende Rotation innerhalb der Basis realisiert werden kann. Das Sitzelement kann dabei ortsfest gegenüber dem Drehelement verbleiben.

Ein allgemeiner Kerngedanke des zweiten Aspekts liegt darin, dass das Sitzelement nicht nur gegenüber der Basis (und zwar in seinem montierten Zustand) rotiert werden kann, sondern auch (gänzlich) von der Basis entfernt werden kann. Eine entsprechende Befestigungseinrichtung für eine Befestigung des ersten Sitzelementes ist dabei vorzugsweise lösbar, so dass das Sitzelement von dem Drehelement und damit von der Basis entfernt werden kann.

Durch die obigen Maßnahmen wird insbesondere die Flexibilität des Kindersitzsystems auf einfache und sichere Art und Weise verbessert.

Bei dem Drehelement kann es sich um einen Drehteller handeln. Bei dem Sockelelement kann es sich um ein Element handeln, das das Drehelement randseitig umgibt. Insbesondere kann das Sockelelement eine Ausnehmung bilden, in der das Drehelement (drehbar) aufgenommen ist oder einen Rahmen bilden, in dem das Drehelement (drehbar) aufgenommen ist.

Unter einer "Ausrichtung" ist im vorliegenden Zusammenhang die Ausrichtung des Sitzelementes in Bezug auf die Fahrzeugrichtung bzw. die Blickrichtung des Kindes zu verstehen. In einer Ausrichtung nach vorne blickt das Kind nach vorne, in Fahrtrichtung. In einer Ausrichtung nach hinten blickt das Kind nach hinten, Richtung Rückenlehne (eines Fahrzeugsitzes, auf dem die Basis montiert ist). Eine Achse für eine Änderung der Ausrichtung ist insbesondere, zumindest im Wesentlichen, senkrecht.

Das Sitzelement ist vorzugsweise von einer ersten Ausrichtung in eine zweite Ausrichtung rotierbar. Dies bedeutet insbesondere, dass das Sitzelement bei der Änderung der Ausrichtung grundsätzlich auf der Basis bzw. dem Sockelelement verbleibt (die Basis bzw. das Sockelelement also dabei zumindest kontaktiert). Insbesondere ist eine derartige Rotation ohne gleichzeitige Translationsbewegung (des Sitzelementes relativ gegenüber der Basis bzw. dem Sockelelement) ermöglicht. Ein Entfernen des Sitzes von der Basis bzw. dem Sockelelement zur Durchführung der Rotation ist nicht (zwingend) notwendig.

Insbesondere kann zwischen erster und zweiter Ausrichtung eine Zwischenposition durch Verdrehen (bzw. Rotation) eingenommen werden. Es kann also ggf. ein Winkelbereich kontinuierlich durchlaufen werden. Gegebenenfalls kann in Ergänzung zu einem Ausrichtungswechsel (also einer Rotation um eine zumindest im Wesentlichen vertikale Achse) eine Neigung des Sitzelementes verstellt werden (was ebenfalls in gewissem Sinne einer Rotation entspricht, im Nachfolgenden wird für diese Bewegung jedoch der Begriff "Neigung" bzw. "Neigungsänderung" verwendet werden). Eine Achse für den Ausrichtungswechsel ist nicht identisch mit einer Achse für die Neigung (oder auch Verkippung). Die Achse für den Ausrichtungswechsel ist insbesondere (zumindest im Wesentlichen) senkrecht. Die Achse für die Neigung (also Verkippung) ist eine (in Einbaulage des Sitzelementes) zumindest im Wesentlichen horizontale Achse. Die Neigung betrifft also eine Schrägstellung oder Verkippung des Sitzes, beispielsweise das Überführen des Sitzelementes von einer Ruheposition (Liegeposition) in eine Sitzposition (oder auch umgekehrt).

Gemäß einem dritten Aspekt (der insbesondere mit dem obigen ersten und/oder zweiten Aspekt kombiniert werden kann) wird ein Kindersitzsystem vorgeschlagen, umfassend zumindest ein erstes Sitzelement, ein zweites Sitzelement und eine (auf einem Fahrzeugsitz anbringbare) Basis, wobei zumindest das erste Sitzelement (insbesondere in einem auf der Basis montierten Zustand) gegenüber der Basis oder einem (insbesondere dem obigen) Sockelelement der Basis von einer ersten Ausrichtung in eine zweite, von der zweiten Ausrichtung abweichende, Ausrichtung rotierbar ist, wobei eine entsprechende Rotation des zweiten Sitzelementes (also eine Rotation gegenüber der Basis oder einem/dem Sockelelement der Basis von einer ersten Ausrichtung in eine zweite, von der ersten Ausrichtung abweichende, Ausrichtung, insbesondere in einem auf der Basis montierten Zustand) gegenüber der Basis verhindert ist oder zumindest im Vergleich zur Rotation des ersten Sitzelementes eingeschränkt ist.

Das Kindersitzsystem gemäß dem dritten Aspekt verbessert die Flexibilität für den Benutzer des Kindersitzsystems, wobei gleichzeitig Sicherheitsaspekte nicht vernachlässigt werden. Insbesondere kann durch die Einschränkung der Rotation des zweiten Sitzelementes verhindert werden, dass dieses auf unerwünschte Art und Weise (beispielsweise in Vorwärts-Ausrichtung bei einem Sitzelement für ein vergleichsweise kleines Kind oder Baby) eingenommen wird. Unter einer Verhinderung der Rotation des zweiten Sitzelementes ist zu verstehen, dass dieses Sitzelement nur in einer (einzigen) Ausrichtung auf der Basis montiert werden kann. Unter einer Einschränkung der Rotation (im Vergleich zum ersten Sitzelement) ist zu verstehen, dass das zweite Sitzelement zwar in verschiedenen Ausrichtungen auf der Basis montiert werden kann (beispielsweise in Rückwärts-Ausrichtung und in einer Ausrichtung zumindest annähernd dem 90°-Winkel dazu), nicht jedoch in sämtlichen Ausrichtungen, die beim ersten Sitzelement möglich sind (wobei das erste Sitzelement dann beispielsweise in Rückwärts-Ausrichtung und Vorwärts-Ausrichtung und ggf. einer Ausrichtung etwa senkrecht dazu konfiguriert sein kann). In einer konkreten Ausführungsform ist also beispielsweise das erste Sitzelement sowohl in Vorwärts- als auch in Rückwärts-Ausrichtung montierbar, das zweite Sitzelement jedoch zumindest nicht in Vorwärts-Ausrichtung.

Gemäß einem vierten und unabhängigen Aspekt der Erfindung (der insbesondere mit dem ersten und/oder zweiten und/oder dritten Aspekt kombiniert werden kann), wird ein Kindersitzsystem vorgeschlagen, umfassend zumindest ein erstes Sitzelement, ein zweites Sitzelement und eine, auf einem Fahrzeugsitz anbringbare, Basis, wobei das erste und/oder zweite Sitzelement (insbesondere in einem auf der Basis montierten Zustand) gegenüber der Basis oder einem (insbesondere dem obigen) Sockelelement der Basis einstellbar ist, vorzugsweise von einer ersten Ausrichtung in eine zweite, von der ersten Ausrichtung abweichende, Ausrichtung rotierbar ist. Gemäß dem vierten Aspekt ist eine Handbetätigungseinrichtung vorgesehen, für eine Verriegelungseinrichtung zur Freigabe und/oder Blockierung der Einstellung, insbesondere Rotation, wobei die Handbetätigungseinrichtung zugänglich ist, wenn das zweite Sitzelement auf der Basis montiert ist, aber nicht oder zumindest nur erschwert zugänglich ist, wenn das erste Sitzelement auf der Basis montiert ist.

Gemäß dem vierten Aspekt wird ein flexibles Kindersitzsystem erzielt, bei dem insbesondere auch Sicherheitsaspekte nicht vernachlässigt werden. Insbesondere wird allein durch die Konfiguration der Basis, einerseits, sowie des ersten bzw. zweiten Sitzelementes, andererseits, erreicht, dass die Handbetätigungseinrichtung entweder zugänglich ist oder nicht. Damit kann eine dem System inhärente Verbesserung der Sicherheit erreicht werden, wobei das Kindersitzsystem dennoch (aufgrund der mehreren auf der Basis anordenbaren Sitzelemente) vergleichsweise flexibel ist.

Gemäß einem weiterbildenden Aspekt, wird eine (insbesondere die obige) Verriegelungseinrichtung zur Freigabe und/oder Blockierung der Einstellung, insbesondere Rotation, vorgeschlagen, wobei die Verriegelungseinrichtung durch das erste Sitzelement (insbesondere ein Verändern einer Neigung des ersten Sitzelementes), nicht aber durch das zweite Sitzelement (insbesondere nicht durch Verändern einer Neigung des zweiten Sitzelementes), das ggf. hinsichtlich seiner Neigung nicht veränderbar ist, betätigbar ist. Insbesondere in diesem Zusammenhang ist unter einer "Neigung" eine Neigung gegenüber der Basis zu verstehen.

Im Zusammenhang des vierten Aspektes ist insbesondere unter einer "Einstellung" des ersten bzw. zweiten Sitzelementes eine Änderung von dessen Konfiguration gegenüber der Basis zu verstehen (also insbesondere eine Ausrichtung, ggf. auch einer Verstellung einer Kopfstütze und/oder Rückenlehne).

Auch durch den weiterbildenden Aspekt wird insbesondere erreicht, dass ein flexibles System, das hohe Sicherheitsansprüche erfüllt, bereitgestellt werden kann.

Insgesamt wird durch die oben genannten Aspekte (also den ersten bis vierten Aspekt) insbesondere ein Kindersitzsystem vorgeschlagen, bei dem eine Basis zur Aufnahme eines Sitzelementes geeignet ist, ein Lösen des Sitzelementes von der Basis zu ermöglichen. Weiterhin (insbesondere gemäß dem dritten und vierten Aspekt) wird eine Basis bereitgestellt, die zur (nicht gleichzeitigen) Aufnahme von zwei oder mehreren verschiedenen Sitzelementen ausgebildet ist, wobei die Basis insbesondere geeignet ist, ein Lösen des jeweils aufgenommenen Sitzes zu ermöglichen. Weiterhin wird eine Basis vorgeschlagen, auf der zumindest ein und ggf. mehrere Sitzelement(e), das/die von der Basis aufgenommen werden kann/können, rotierbar ist.

Unter Sockelelement ist insbesondere derjenige Teil der Basis zu verstehen (bzw. diejenigen Teile bzw. Abschnitte), die im montierten Zustand der Basis (auf dem Fahrzeugsitz) in Kontakt mit dem Fahrzeugsitz ist. Demgegenüber ist das Drehelement vorzugsweise (im montierten Zustand der Basis) nicht in Kontakt mit dem Fahrzeugsitz (ein Kontakt muss jedoch, zumindest nicht vollständig, ausgeschlossen sein). Im montierten Zustand ist das (jeweilige) Sitzelement vorzugsweise in Kontakt mit dem Drehelement. Zusätzlich kann das (jeweilige) Sitzelement jedoch auch (abschnittsweise) auf dem Sockelelement aufliegen.

Unter einem entfernbaren (abnehmbaren) Sitzelement gegenüber der Basis ist ein Sitzelement zu verstehen, das vollständig von der Basis entfernbar ist, so dass ein Zwischenraum zwischen Sitzelement und Basis (nach der Entfernung) vorliegt.

Das Drehelement kann mindestens 10 Gew.-% der gesamten Basis ausmachen. Alternativ oder zusätzlich kann das Sockelelement mindestens 10 Gew.-% bezogen auf die gesamte Basis ausmachen. Das Drehelement kann sich über mindestens 50 % der Breite der gesamten Basis erstrecken und/oder über mindestens 30 % der Länge. Das Sockelelement kann sich über mindestens 90 % der Breite oder die gesamte Breite des Basiselementes erstrecken (bzw. die Gesamt-Breite definieren) und/oder über mindestens 90 % der Länge, vorzugsweise die gesamte Länge (also die Länge des Basiselementes) definieren. Unter einer Breite ist insbesondere eine Erstreckung in einer horizontalen Richtung, senkrecht auf die Ausrichtung der Basis bzw. Blickrichtung des Kindes zu verstehen. Unter einer Länge ist eine Erstreckung in horizontaler Richtung, parallel zu einer Blickrichtung des Kindes bzw. Ausrichtung der Basis zu verstehen. Grundsätzlich kann unter Breite die maximale Breite und unter Länge die maximale Länge verstanden werden.

Das Drehelement kann als (runde, insbesondere kreisrunde) Drehplatte bzw. Drehteller ausgebildet sein.

Das Kindersitzsystem kann mindestens zwei verschiedene Sitzelemente, insbesondere das obige erste Sitzelement sowie das obige zweite Sitzelement, umfassen, die jeweils für sich auf der Basis montierbar sind (und von der Basis insbesondere entfernbar sind).. Die Sitzelemente unterscheiden sich insbesondere hinsichtlich einer zulässigen Maximal-Größe und/der Minimal-Größe des aufzunehmenden Kindes. Die Maximal- und/oder Minimal-Größe des zweiten Sitzelementes ist vorzugsweise 1,2-mal, vorzugsweise 1,5- mal so groß wie die Maximal- bzw. Minimal-Größe des zweitens Sitzelementes. Maximal- bzw. Minimal-Größen sind nach UN ECE Reg. 129 (in der Fassung zum Anmeldezeitpunkt bzw. frühesten Prioritätszeitpunkt der vorliegenden Anmeldung) für jeden Kindersitz (bzw. jedes Sitzelement) vorgegeben.

Als eines der Sitzelemente, insbesondere als das zweite Sitzelement kann eine Babyschale bzw. ein Kindersitz der Gruppe 0/0+ (Gewicht < 13 kg; zur Benutzung während der Fahrt insbesondere nur entgegen der Fahrtrichtung) und/oder Klasse I (Gewicht 9 bis 18 kg) vorliegen. Als weiteres, insbesondere erstes, Sitzelement kann ein Kindersitz der Klasse I (9 bis 18 kg) und/oder II (Gewicht 15 bis 25 kg) und/oder Klasse III (Gewicht 22 bis 36 kg) vorgesehen sein. Die Gewichtsangaben beziehen sich hier auf das Gewicht des Kindes. Die Verknüpfung "und/oder" in Bezug auf die Klassen bedeutet, dass es sich um Kindersitze handeln kann, die entweder nur der einen Klasse oder nur der anderen Klasse oder beiden Klassen zugeordnet werden können, (beispielsweise bei größen-anpassbaren Kindersitzen). Die Klassen sollen sich insbesondere nach der Regelung ECE-R 44; 6.1.3 oder einer vergleichbaren Regelung bestimmen (in der Fassung zum Anmeldezeitpunkt bzw. frühesten Prioritätszeitpunkt der vorliegenden Anmeldung).

Im Allgemeinen ist das zweite Sitzelement vorzugsweise für kleinere Kinder konfiguriert (insbesondere Babys) als das erste Sitzelement. Dies kann beispielsweise dadurch erkannt werden, dass das zweite Sitzelement eine geringere Höhe (maximale Höhe), also Erstreckung in vertikaler Richtung aufweist, als das erste Sitzelement (und/oder ein geringeres Gewicht). Beispielsweise kann eine Höhe des ersten Sitzelementes 1,5-mal so hoch sein wie eine Höhe des zweiten Kindersitzelementes. Weiterhin kann ein Gewicht des ersten Sitzelementes mindestens 1,5-mal dem Gewicht des zweiten Sitzelementes entsprechen.

Die Basis, insbesondere das Sockelelement, kann mindestens eine Verankerungseinrichtung umfassen, über die die Basis (das Sockelelement) an der Karosserie des Fahrzeugs (starr) verankert werden kann. ISOFIX bezieht sich auf die Norm ISO 13216 (Gültigkeit zum Anmelde- bzw. frühesten Prioritätszeitpunkt der vorliegenden Anmeldung). Die Verankerungseinrichtung kann mindestens einen oder mindestens (oder genau) zwei Verankerungsarme umfassen. Diese können ggf. ihrer Länge nach verstellbar sein. Die Verankerungseinrichtung kann als ISOFIX-Verankerungsvorrichtung ausgebildet sein. Weiterhin kann die Verankerungseinrichtung als Latch-System-Verankerungseinrichtung ausgebildet sein. Latch-Systeme (wobei Latch für "lower anchors and tether for children" steht) sind insbesondere in den USA gebräuchlich. Insbesondere kann das Sitzelement mit Hilfe von (gespannten) Gurtbändern mit Haltebügeln verbunden werden (Soft-ISOFIX).

Die Basis, insbesondere das Sockelelement, kann einen Stützfuß aufweisen (insbesondere als integraler Bestandteil des Sockelelements).

Die Basis, insbesondere das Sockelelement und/oder das Drehelement, kann eine Indikatoreinrichtung zur Indikation einer bestimmten Konfiguration des Sitzelementes umfassen. Die Konfiguration umfasst vorzugsweise eine Ausrichtung des Sitzelements gegenüber der Basis und/oder eine Ausrichtung des Drehelementes gegenüber dem Sockelelement und/oder eine (korrekte) Befestigung der Basis und/oder eine (korrekte) Einstellung eines eventuell vorhandenen Stützfußes.

Die Basis, insbesondere das Sockelelement und/oder Drehelement, kann eine Anti-Rebound-Einrichtung, insbesondere eine Anti-Rebound-Bar (oder Anti-Rebound-Vorsprung) umfassen. Unter einer Anti-Rebound-Einrichtung ist insbesondere eine Einrichtung zu verstehen, die einen Rückprall des Sitzelementes zumindest teilweise auffängt (entschärft). Ein Rückprall kann beispielsweise dann auftreten, wenn das Fahrzeug stark verzögert, so dass das Sitzelement relativ zum Fahrzeug nach vorne beschleunigt wird und aufgrund der Halteeinrichtungen zu einem späteren Zeitpunkt nach hinten (gegenüber dem Fahrzeug) sich zurückbewegt (bzw. zurückprallt).

Die Basis, insbesondere das Drehelement, kann mindestens eine Befestigungseinrichtung zur Befestigung eines Sitzelementes oder mindestens zwei oder mehr Befestigungseinrichtungen (für eine derartige Befestigung) aufweisen. Eine erste Befestigungseinrichtung kann ggf. (insbesondere nur) zur Befestigung eines (des) ersten Sitzelementes ausgebildet sein. Eine zweite Befestigungseinrichtung kann (insbesondere nur) zur Befestigung eines (des) zweiten Sitzelementes ausgebildet sein. Dadurch können flexibel und variabel verschiedene Sitzelemente zum Einsatz kommen. Dieser Aspekt wird optional auch als unabhängiger Aspekt der Erfindung offenbart und beansprucht.

Mindestens eine Befestigungseinrichtung kann zur Befestigung von zwei oder mehr (verschiedenen) Sitzelementen konfiguriert sein. Mehrere Befestigungseinrichtungen können sowohl zur Befestigung von einem als auch zur Befestigung von mindestens einem anderen Sitzelement konfiguriert sein.

Die Basis (insbesondere das Drehelement) kann ggf. auch eine weitere (die zweite und/oder eine dritte) Befestigungseinrichtung oder mehrere weitere Befestigungseinrichtungen aufweisen, um zusammen mit der ersten Befestigungseinrichtung das Sitzelement mit erhöhter Sicherheit auf der Basis zu befestigen und/oder um ein anderes Sitzelement (einer zweite Gruppe von Sitzen) zu befestigen.

Die (jeweilige) Befestigungseinrichtung kann ein oder mehrere Riegelelemente aufweisen, beispielsweise einen oder mehrere Haken, insbesondere zum Umgreifen einer oder mehrerer (an einem Boden) des Sitzelementes angebrachter Stangen.

Das erste und/oder zweite Sitzelement, ggf. einschließlich Drehelement, kann in mindestens (oder genau) zwei verschiedenen Ausrichtungen, oder in mindestens vier (oder genau vier) verschiedenen Ausrichtungen arretierbar sein, insbesondere derart, dass die Arretierung nur durch die Betätigung einer Verriegelungseinrichtung lösbar ist, wobei die Verriegelungseinrichtung dazu insbesondere gegenüber der Basis (wenn sie an dieser befestigt ist) bewegbar (insbesondere translatorisch bewegbar und/oder rotierbar) ist und/oder gegenüber dem Sitzelement und/oder Drehelement bewegbar (insbesondere translatorisch bewegbar und/oder rotierbar) ist, wenn sie am Sitzelement und/oder Drehelement befestigt ist. Die zwei verschiedenen Ausrichtungen können insbesondere eine Vorwärts-Ausrichtung und eine Rückwärts-Ausrichtung sein. Eine ggf. dritte oder vierte Ausrichtung kann eine Ausrichtung sein, die sich (winkelmäßig), insbesondere genau, zwischen der Vorwärts- und Rückwärts-Ausrichtung, also insbesondere in einem 90°-Winkel dazu, erstreckt.

Alternativ oder zusätzlich kann das erste und/oder zweite Sitzelement, ggf. einschließlich Drehelement, in mindestens oder genau zwei verschiedenen Ausrichtungen festlegbar sein, insbesondere derart, dass die Festlegung (ausschließlich) durch eine Rotation des ersten bzw. zweiten Sitzelements und/oder des Drehelementes, aufhebbar ist. Diese Ausrichtung(en) befindet/befinden sich vorzugsweise (winkelmäßig), insbesondere genau, zwischen der Vorwärts- und Rückwärts-Ausrichtung, also insbesondere in einem 90°-Winkel dazu.

Im Allgemeinen soll eine Festlegung durch Ineinandergreifen von Einrichtungen (Elementen) erfolgen, die vorzugsweise starr mit demjenigen Element (Basis, insbesondere Sockel- und/oder Drehelement, oder Sitzelement) verbunden sind, an dem sie angeordnet sind. Eine Festlegung kann insbesondere über eine Kombination von Vorsprung und entsprechender Ausnehmung/Öffnung erfolgen, wobei der Vorsprung an der Basis, insbesondere dem Sockelelement, vorgesehen sein kann und die Ausnehmung am Sitzelement bzw. Drehelement (oder umgekehrt). Vorzugsweise sind in diesem Sinne insbesondere Zwischen-Ausrichtungen (winkelmäßig zwischen der Vorwärts- und der Rückwärts-Ausrichtung, jedoch nicht exakt die Vorwärts- bzw. Rückwärts-Ausrichtung umfassend), festlegbar, insbesondere Ausrichtungen in einem 90°-Winkel zu der Vorwärts- bzw. Rückwärts-Ausrichtung, insbesondere in beide seitlichen Richtungen.

Eine Festlegung kann insbesondere durch ein Soft-lock realisiert werden.

Vorzugsweise ist mindestens eine erste und/oder mindestens eine zweite Verriegelungseinrichtung zum Lösen und/oder Herstellen einer Arretierung (Verriegelung) einer Ausrichtung des Sitzelementes und/oder des Drehelementes, vorgesehen.

Die erste und/oder zweite Verriegelungseinrichtung ist/sind vorzugsweise an der Basis, insbesondere einer Oberseite der Basis, und/oder an dem Sitzelement, insbesondere einer Unterseite des Sitzelementes und/oder an dem Drehelement, insbesondere einer Unterseite des Drehelementes, angeordnet.

Die erste und/oder zweite Verriegelungseinrichtung kann in einem Bereich, der vom ersten und/oder einem/dem zweiten Sitzelement im montierten Zustand überdeckt ist, vorzugsweise von der jeweiligen Oberseite bzw. Unterseite vorstehend, angeordnet sein.

Vorzugsweise kann die Verriegelungseinrichtung einen ersten Zustand einnehmen, in dem das Sitzelement, insbesondere einschließlich Drehelement gegenüber dem Sockelelement (rotationsmäßig) verriegelt ist und ein zweiter Zustand, in dem eine Rotation ermöglicht ist. Die (jeweilige) Verriegelungseinrichtung kann insbesondere zwischen einer ersten Position (die sie im ersten Zustand einnehmen kann) und einer zweiten Position (die sie im zweiten Zustand einnehmen kann) überführbar sein, beispielsweise durch Rotation und/oder Translation (ggf. sowohl in Bezug auf das Sockelelement als auch in Bezug auf das Sitzelement bzw. das Drehelement).

Vorzugsweise steht eines oder mehrere (oder alle) Verriegelungseinrichtungen (zumindest im zweiten Zustand) nach oben hervor (beispielsweise durch Öffnungen, insbesondere Schlitze hindurch) und sind dadurch insbesondere geeignet, von einer Außenfläche eines auf der Basis befestigten Sitzelementes (ggf. weiter oder vollständig) gegenüber der Basis bzw. dem Sockelelement verschoben und/oder rotiert zu werden (so dass sie von ihrer ersten in ihre zweite Position überführt werden).

Mindestens ein, mehrere oder alle Verriegelungseinrichtungen können in Richtung ihrer ersten Position, z. B. mittels einer Feder, vorgespannt sein.

In konkreten Ausführungsformen kann/können mindestens ein, mehrere oder alle Verriegelungseinrichtungen (distale) Enden (insbesondere eine Hebelarmes) aufweisen, die in mehreren Positionen (insbesondere der obigen ersten sowie zweiten Position) unterhalb einer Auflagefläche (Rotationsfläche) der Basis (insbesondere einer entsprechenden Auflage/Rotationsfläche des Drehelementes) liegen. In der ersten Position kann die entsprechende Verriegelungseinrichtung in eine Gegenstruktur (z. B. eine Vertiefung, eine Öffnung, ein Loch oder dergleichen) des Sockelelementes der Basis eingreifen und dadurch eine Rotation verhindern (blockieren), während sie in der zweiten Position (der entsprechenden Verriegelungseinrichtung) von der Gegenstruktur wegbewegt wird und dadurch eine Rotation ermöglicht wird.

Die Basis ist vorzugsweise geeignet, mindestens ein Sitzelement in mindestens zwei verschiedenen Zuständen aufzunehmen, nämlich einem Verriegelungszustand, in dem beispielsweise eine Außenfläche (z. B. untere und/oder hintere Fläche) des Sitzelementes nicht gegen eine zugeordneten Verriegelungseinrichtung drückt (insbesondere ein proximales Ende der zugeordneten Verriegelungseinrichtung drückt) und ein Rotationszustand, in dem beispielsweise die Außenfläche des Sitzelementes gegen die zugeordneten Verriegelungseinrichtung(en) (insbesondere eines, ggf. proximalen, Endes z.B. eines weiteren Hebelarmes, davon) drückt und dadurch die Verriegelungseinrichtung in seine zweite Position bewegt wird.

In einer konkreten Ausführungsform kann das Lösen und/oder Herstellen einer Arretierung durch Verstellen einer Konfiguration, insbesondere Neigung, des ersten und/oder zweiten Sitzelementes, insbesondere durch Verstellen einer Konfiguration, vorzugsweise Neigung, des ersten Sitzelementes, betätigbar sein.

Vorzugsweise kann das (entsprechende) Sitzelement in eine maximal aufgerichtete Stellung verbracht werden (die ggf. nicht mehr verrastbar ist, also insbesondere nicht für den dauerhaften Gebrauch vorgesehen ist und oberhalb der maximalen Gebrauchsstellung liegen kann), wobei dann eine Rotationsblockierung aufgelöst wird und das Sitzelement entsprechend rotiert werden kann (ggf. mit dem Drehelement). Sobald die Neigungsstellung wieder eine Gebrauchsstellung einnimmt (was ggf. durch die Gewichtskraft und/oder eine Vorspanneinrichtung, insbesondere Federeinrichtung bewirkt werden kann), ist die Rotation wieder blockiert.

Eine oder mehrere oder alle Verriegelungseinrichtungen können manuell, vorzugsweise über eine/die Handbetätigungseinrichtung, insbesondere über eine Schiebe-, Zug- und/oder Dreh-Betätigungseinrichtung, betätigbar sein. Eine derartige manuelle Betätigung kann auf dieselbe oder dieselben Verriegelungseinrichtungen einwirken, wie auch die Betätigung über die Verstellung der Konfiguration (Neigung) eines Sitzelementes. Alternativ können auch verschiedene Verriegelungseinrichtungen vorgesehen sein, wobei eine erste Verriegelungseinrichtung (oder eine erste Gruppe von Verriegelungseinrichtungen) durch Verstellen der Konfiguration (Neigung) eines Sitzelementes, insbesondere des ersten Sitzelementes, betätigbar ist (bzw. insbesondere ausschließlich dadurch betätigbar ist) und eine zweite Verriegelungseinrichtung (oder eine zweite Gruppe von Verriegelungseinrichtungen) durch eine manuelle Betätigung betätigbar ist (ggf. ausschließlich über eine manuelle Betätigung betätigbar ist).

Im Allgemeinen kann/können eine, mehrere oder alle Verriegelungseinrichtungen zum Lösen und/oder Herstellen der Arretierung rotierbar und/oder translatorisch bewegbar sein.

Gegebenenfalls können eine erste und eine zweite Verriegelungseinrichtung spiegelsymmetrisch zueinander angeordnet sein bzw. ausgebildet werden.

Zwei oder mehr Verriegelungseinrichtungen können miteinander gekoppelt sein, insbesondere in dem Sinne, dass eine Betätigung einer ersten Verriegelungseinrichtung (automatisch) auch zu einer Zustandsänderung der zweiten Verriegelungseinrichtung (bzw. deren Betätigung) führt.

Eine entsprechende Kopplung kann beispielsweise über eine Kopplungsstange (insbesondere zur rotatorischen Kopplung bzw. Drehmomentkopplung) erfolgen.

Eine erste Betätigungseinrichtung, insbesondere eine/die (erste) Handbetätigungseinrichtung zum Lösen und/oder Herstellen einer Arretierung der Ausrichtung des Sitzelementes und/oder des Drehelementes ist vorzugsweise in einem ersten seitlichen Bereich der Basis, insbesondere des Sockel- und/oder Drehelementes, angeordnet. Gegebenenfalls ist eine zweite (entsprechende) Betätigungseinrichtung in einem zweiten, dem ersten Bereich gegenüberliegenden, seitlichen Bereich der Basis, insbesondere des Sockel- und/oder Drehelementes, angeordnet. Unter einem seitlichen Bereich der Basis, ist insbesondere ein Bereich zu verstehen, der von einem am weitesten seitlich vorstehenden Punkt des jeweiligen Elements bzw. der jeweiligen Einrichtung nicht weiter als bis zu 20 % einer Entfernung bis zu dem gegenüberliegenden am weitesten vorstehenden Punkt reicht, vorzugsweise nicht mehr als 10 %. Insbesondere kann ein seitlicher Bereich dadurch definiert sein, dass er bei einem ersten (größeren) Sitzelement bedeckt ist und bei einem zweiten (kleineren) Sitzelement freibleibt.

Alternativ oder zusätzlich kann mindestens eine (insbesondere mindestens eine dritte) Verriegelungseinrichtung zum Lösen und/oder Herstellen einer Arretierung der Ausrichtung des Sitzelementes und/oder des Drehelementes, in einem (dem) ersten seitlichen Bereich der Basis, insbesondere des Sockel- und/oder Drehelementes, angeordnet sein und ggf. eine entsprechende vierte Verriegelungseinrichtung in einem (dem) zweiten, dem ersten Bereich gegenüberliegenden, seitlichen Bereich der Basis, insbesondere des Sockel- und/oder Drehelementes angeordnet sein.

Durch eine seitliche Anordnung eines oder mehrerer oder aller Verriegelungselemente, insbesondere durch eine seitliche Anordnung eines, mehrerer oder aller Betätigungseinrichtungen, kann auf einfache Art und Weise erreicht werden, dass die entsprechende Verriegelungs- bzw. Betätigungseinrichtung bei kleineren (schmaler bauenden) Kindersitzen zugänglich ist (jedoch nicht bei größeren Sitzelementen).

Im Allgemeinen kann eines oder mehrere oder alle Verriegelungseinrichtungen (insbesondere die mindestens eine erste und/oder zweite und/oder dritte und/oder vierte Verriegelungseinrichtung) manuell betätigbar sein, beispielsweise über einen Aktuator (z. B. einen Knopf, einen Schieber und/oder ein Schalter), wobei vorzugsweise eine doppelte Operation (double action) dazu notwendig sein kann bzw. die Betätigungseinrichtung (der Aktuator) entsprechend konfiguriert sein kann. Unter doppelter Operation ist insbesondere die gleichzeitige oder sukzessive Ausführung zweier Operationen (Aktionen) zu verstehen (um ein versehentliches Betätigung zu erschweren).

Eine (jeweilige) manuelle Betätigungseinrichtung für eine oder mehrere oder aller Verriegelungseinrichtungen (insbesondere der dritten und vierten Verriegelungseinrichtung), z. B. der oben genannte Aktuator, kann vorzugsweise an einer Position des Drehelementes vorgesehen sein, die sich bei Ausrichtung eines auf der Basis zu befestigenden Sitzelementes in oder entgegen der Fahrtrichtung des Fahrzeugs in seitlicher Richtung, also in und entgegengesetzt der Richtung der dem Sitz benachbarten Türen des Fahrzeugs befinden.

Vorzugsweise ist/sind mindestens eine, oder mehrere oder alle Verriegelungseinrichtungen (weiter vorzugsweise die mindestens eine dritte und mindestens eine vierte Verriegelungseinrichtung) miteinander verbunden, so dass bei Überführung einer der Verriegelungseinrichtungen von ihrer ersten in eine zweite Position beide (alle) Verriegelungseinrichtungen überführt werden. Konkret können die Verriegelungseinrichtungen durch eine Stange verbunden (bzw. gekoppelt) sein.

Mindestens eine erste (oder mindestens eine Gruppe von ersten) Verriegelungseinrichtung(en) können zum Zusammenwirken mit einem (dem) ersten Sitzelement konfiguriert sein (insbesondere ausschließlich zum Zusammenwirken mit diesem). Mindestens eine zweite (oder eine zweite Gruppe von) Verriegelungseinrichtung(en) kann zum Zusammenwirken mit einem (dem) zweiten Sitzelement konfiguriert sein (insbesondere ausschließlich zum Zusammenwirken mit diesem).

In Ausführungsformen können mindestens eine fünfte und/oder sechste Verriegelungseinrichtung vorgesehen sein. Vorzugsweise ist die fünfte Verriegelungseinrichtung ausgebildet, um bei einem Teil der in der ersten Ausrichtung möglichen Konfigurationen einer Kopfstütze des Sitzelementes zu verhindern, dass das Sitzelement von der ersten in die zweite Ausrichtung rotierbar ist. Alternativ oder zusätzlich kann die sechste Verriegelungseinrichtung ausgebildet sein, zu verhindern, dass ein Teil von den in der ersten Ausrichtung möglichen Konfigurationen in der zweiten Ausrichtung einstellbar ist.

Im Allgemeinen sind bei der Kopfstütze des Stützelementes in der ersten Ausrichtung verschiedene Konfigurationen, insbesondere betreffend eine Höhe der Kopfstütze, einstellbar. Insofern handelt es sich bei den zuvor erwähnten Konfigurationen insbesondere um Konfigurationen der Kopfstütze, insbesondere einer Höhe der Kopfstütze.

Die fünfte und/oder sechste Verriegelungseinrichtung ist vorzugsweise unabhängig von den weiter oben beschriebenen Verriegelungseinrichtungen (insbesondere den ersten bis vierten Verriegelungseinrichtungen). Die fünfte und/oder sechste Verriegelungseinrichtung kann insbesondere wie in DE 20 2016 104 181 U1 ausgebildet sein (dort insbesondere als Blockiereinrichtungen bezeichnet). Eine Steuerung der fünften und/oder sechste Verriegelungseinrichtung kann wie in DE 20 2016 104 181 U1 beschrieben, über eine Kopfstütze, aber auch über einen beliebigen anderen Mechanismus, beispielsweise über einen dazu vorgesehen Aktuator erfolgen. Wenn im Gegensatz zur DE 20 2016 105 181 U1 die Basis von den darauf befestigbaren Sitzelementen getrennt werden kann, können die Mittel der Blockierung der Rotation in der Basis bereitgestellt werden. Ein Übertragen der Steuerung kann analog der in der DE 20 2016 104 181 U1 beschriebenen Steuerung erfolgen, wobei die entsprechenden Steuerungsmittel (z. B. Stangen) ggf. durch das Sockelelement der Basis greifen können bzw. dort angeordnet sein können.

Das zweite Sitzelement kann so ausgestaltet sein, dass es keine zur Überführung der entsprechenden Verriegelungseinrichtung, zumindest keine zur Überführung mindestens einer ersten und/oder mindestens einer zweiten Verriegelungseinrichtung geeignete Struktur (Außenfläche) aufweist.

Erste und dritte Verriegelungseinrichtung, einerseits, und/oder zweite und vierte Verriegelungseinrichtung, andererseits, können identisch sein, so dass sie (mit einem ersten Sitzelement) sowohl durch das Sitzelement selbst, als auch (mit einem zweiten Sitzelement) über eine manuelle Betätigung (z. B. einen Aktuator) betätigbar sind. Das erste Sitzelement kann eine manuelle Betätigung, z. B. den Aktuator (ggf. in jeglicher Ausrichtung) vollständig oder teilweise überdecken, so dass eine Betätigung nicht oder nur (deutlich) erschwert möglich ist.

Die erste Ausrichtung entspricht insbesondere einer Konfiguration des Kindersitzes, bei der das Sitzelement rückwärts gerichtet ist. Die zweite Ausrichtung entspricht insbesondere einer Konfiguration des Kindersitzes, bei das Sitzelement vorwärts ausgerichtet ist.

Der Kindersitz kann in eine dritte Ausrichtung rotierbar sein, wobei die dritte Ausrichtung vorzugsweise zwischen der ersten und der zweiten Ausrichtung liegt, insbesondere gegenüber der ersten und/oder zweiten Ausrichtung um 90° rotiert ist.

Gemäß einem fünften Aspekt der Erfindung (der mit dem vierten Aspekt und optional mit einem oder mehreren der obigen weiteren Aspekte, insbesondere dem ersten und/oder zweiten und/oder dritten und/oder weiterbildenden Aspekt, kombiniert werden kann), wird vorgeschlagen: ein Kindersitzsystem, umfassend zumindest ein (erstes) Sitzelement und eine auf einem Fahrzeugsitz anbringbare, Basis, wobei die Basis ein Stütz- und/oder Stabilisierungselement, insbesondere eine Stütz- und/oder Stabilisierungsfinne aufweist, zum Stützen und/oder Stabilisieren des Sitzelementes, wenn sich dieses auf der Basis befindet.

Ein Kerngedanke des fünften Aspektes liegt darin, dass ein Stütz- und/oder Stabilisierungselement, insbesondere eine entsprechende Finne, vorgeschlagen wird, die ein Teil einer tragenden (stützenden) Struktur für das Sitzelement darstellt.

Dazu ragt das Stütz- und/oder Stabilisierungselement vorzugsweise von der Basis, insbesondere einem (dem) Drehelement der Basis, nach oben, beispielsweise um mindestens 10 cm, vorzugsweise mindestens 20 cm. Im montierten Zustand liegt das Sitzelement an dem Stütz- und/oder Stabilisierungselement an. Das Stütz- und/oder Stabilisierungselement, insbesondere die Finne, kann an einem (in Bezug auf die Fahrtrichtung) vorderen Ende (in einer konkreten Ausführungsform an dem Ende, an dem auch ein Stützfuß angebracht ist) angeordnet sein. Befestigungseinrichtungen zur Befestigung des Sitzelementes können (unmittelbar) benachbart zur Finne bzw. an der Finne bzw. in diese integriert vorgesehen sein, so dass das Stütz- und/oder Stabilisierungselement (die Finne) an einer Rückwand des Sitzelementes anliegt oder in diese eingeschoben wird und somit ihre stützende bzw. stabilisierende Wirkung entfalten kann.

Das Stütz- und/oder Stabilisierungselement (insbesondere die Finne) weist vorzugsweise einen Verstärkungseinsatz, insbesondere aus Metall, auf, der ggf. von einem anderen Material (z. B. Kunststoff) umgeben werden kann. Der Verstärkungseinsatz ist kann bügelförmig oder (zumindest im Wesentlichen) plattenförmig sein und ggf. der Form des gesamten Stütz- und/oder Stabilisierungselementes (insbesondere der Finne) entsprechen oder diese zumindest nachbilden. Das Stütz- und/oder Stabilisierungselement (Finne) weist vorzugsweise eine sich nach oben verjüngende Form auf. Das Stütz- und/oder Stabilisierungselement (die Finne) kann insgesamt eine abgerundete Form aufweisen. Weiterhin kann sich das Stütz- und/oder Stabilisierungselement über (zumindest an seinem unteren Ende) mindestens 10 %, vorzugsweise mindestens 20 %, noch weiter vorzugsweise mindestens 50 % einer Breite der Basis (maximalen Breite der Basis) erstrecken. Vorzugsweise ist das Stütz- und/oder Stabilisierungselement (die Finne) auf einer Basis vorgesehen, die ein Drehelement und ein Sockelelement (wie oben beschrieben) aufweist. Vorzugsweise befindet sich das Stütz- und/oder Stabilisierungselement (die Finne) auf dem Drehelement. Dadurch wird insbesondere erreicht, dass die Abstützung zur Stabilisierung an einer geeigneten Stelle erfolgt. Alternativ kann das Stütz- und/oder Stabilisierungselement (die Finne) auf dem Sockelelement angeordnet sein.

Weiterhin kann das Stütz- und/oder Stabilisierungselement (die Finne) als Schnittstelle zur Übertragung von Einstellungen des Sitzelementes gegenüber der Basis dienen. Eine Möglichkeit hierfür wäre die Übertragung einer Einstellung zum Gewähren oder Blockieren einer Rotation des Sitzes (bzw. Veränderung der Ausrichtung), wie beispielsweise in der DE 20 2016 104 181 U1 beschrieben. Dabei kann eine Steuerung gemäß der DE 20 2016 104 181 U1 über eine Konfiguration (insbesondere Höhe) der Kopfstütze erfolgen, ebenso aber auch über ein anderes Element, wie beispielsweise einen hierfür vorgesehenen Aktuator (Knopf, Schalter, Schieber oder dergleichen).

In einer konkreten Ausführung kann die Stütz- und/oder Stabilisierungseinrichtung (Finne) in einem oberen Bereich eine oder mehrere (erste) Vorsprünge aufweisen und/oder einen oder mehrere seitliche (zweite) Vorsprünge. Der erste Vorsprung bzw. die ersten Vorsprünge und der zweite Vorsprung bzw. die zweiten Vorsprünge können (insbesondere im Inneren der Stütz- und/oder Stabilisierungseinrichtung bzw. der Finne) miteinander verbunden sein, insbesondere derart, dass sie gemeinsam in einer (zumindest im Wesentlichen) vertikalen Richtung gegenüber der Basis zwischen zwei Positionen bewegt werden können. In einer ersten (oberen) Position kann dabei eine (vollständige) Arretierung des Sitzes vorliegen, in einer zweiten (unteren) Position hingegen, bei einer rückwärts gerichteten Ausrichtung des Sitzes, nur eine Rotation in eine Ein- und/oder Ausstiegsposition (z. B. 90° rotiert) ermöglicht sein. Alternativ wäre auch eine (vollständige) Blockage der Rotation möglich.

Die Basis kann Mittel enthalten, die bei einer Vorwärts-Ausrichtung eine Überführung der Vorsprünge von der ersten in die zweite Position verwehren. Dabei kann das Sitzelement (insbesondere ein als Babyschale ausgebildetes Sitzelement) in der ggf. einzig möglichen (rückwärts gerichteten) Position gegenüber der Basis auf die ersten Vorsprünge drücken und damit die Rotation blockieren. Alternativ oder zusätzlich kann eine Installation des Sitzelementes (insbesondere der Babyschale) in der Vorwärts-Ausrichtung wirksam verhindert werden, da die Vorsprünge nicht in die zweite Position überführt werden können und das Sitzelement (die Babyschale) dadurch nicht (ausreichend) weit nach unten bewegt werden kann, um mit Verriegelungseinrichtungen des Sitzes zusammenzuwirken. Demgegenüber kann beispielsweise ein weiteres Sitzelement (z. B. ein Gruppe II/III-Sitzelement) mit den zweiten Vorsprüngen zusammenwirken, die von entsprechenden korrespondierenden Elementen heruntergedrückt werden können, wenn die Kopfstütze oder Knopf etc. (siehe oben) in die entsprechende Position bewegt wird.

Eine weitere Möglichkeit zur Nutzung der Finne als Schnittstelle zur Übertragung von Einstellungen des Sitzelementes wäre das Überführen eines Seitenaufprallschutzelementes von einer Aufbewahrungs- in eine Gebrauchsstellung. Der Auslösemechanismus kann genauso ausgeführt sein wie für die Blockade der Rotation beschrieben, also durch Vorsprünge oder auch durch versenkte Elemente, die mit Vorsprüngen am Sitz zusammenwirken. Gegebenenfalls kann an der Stütz- und/oder Stabilisierungseinrichtung (der Finne), insbesondere an dem Teil, der bei installiertem Sitzelement überdeckt ist, ein Schalter vorhanden sein, der steuert, auf welcher Seite der Seitenaufprallschutz überführt wird. Dies ist insbesondere bei Sitzelementen für kleinere Kinder (insbesondere Babyschalen) vorteilhaft, da diese häufig von der Basis entfernt werden und der Seitenaufprallschutz dann meist in die Ruhe- bzw. Aufbewahrungsstellung überführt wird, um nicht im Weg zu sein. Generell ist unter einer Ruhe- bzw. Aufbewahrungsstellung des Seitenaufprallschutzelementes eine Stellung des Elementes zu verstehen, bei der dieses weniger weit (oder überhaupt nicht) in seitlicher Richtung vorsteht, als in der Gebrauchsstellung.

Insgesamt kann durch die Ausbildung des Stütz- und/oder Stabilisierungselementes (der Finne) erreicht werden, dass ein Gewicht des Sitzelementes (insbesondere einer Babyschale) vergleichsweise gering ausgebildet sein kann, da das Sitzelement vergleichsweise schwach ausgebildet werden kann, da es im Gebrauch ohnehin durch das Stütz- und/oder Stabilisierungselement (die Finne) entsprechend verstärkt wird.

Die oben genannte Aufgabe wird weiterhin gelöst durch eine Basis für ein Sitzelement, wobei die Basis die oben beschriebenen Merkmale aufweist (insbesondere gemäß dem ersten und/oder zweiten und/oder dritten und/oder vierten und/oder fünften Aspekt). Insoweit in Bezug auf die obigen Kindersitzsystemen auch das Sitzelement beschrieben wird, bedeutet dies vorzugsweise für die Basis, dass diese entsprechend konfiguriert sein muss, um mit dem Sitzelement entsprechend zusammenzuwirken (insbesondere entsprechend verbunden zu werden).

Weitere Merkmale ergeben sich aus den Unteransprüchen.

Nachfolgend wird die Erfindung anhand eines Ausführungsbeispiels näher erläutert. Hierbei zeigen:
- Fig. 1: eine Schrägansicht einer erfindungsgemäßen Basis mit einem schematisch dargestellten Sitzelement;
- Fig. 2: einen ersten Ausschnitt aus Fig. 1;
- Fig. 3: einen zweiten Ausschnitt aus Fig. 1;
- Fig. 4: einen dritten Ausschnitt aus Fig. 1;
- Fig. 5: einen Schnitt eines weiteren Ausschnitts aus Fig. 1;
- Fig. 6: eine Schrägansicht auf eine erfindungsgemäße Basis, wobei ein Inneres teilweise freigegeben ist;
- Fig. 7: eine vergrößerte Darstellung eines Details aus Fig. 6;
- Fig. 8: eine vergrößerte Darstellung eines Details aus Fig. 6;
- Fig. 9: eine vergrößerte Darstellung eines Details aus Fig. 6 bzw. eine Perspektivansicht von Fig. 8;
- Fig. 10: eine Ansicht der erfindungsgemäßen Basis (mit teilweise freigegebenem Inneren bzw. ohne Abdeckung) in einer Ein- bzw. Ausstiegsposition;
- Fig. 11: eine vergrößerte Darstellung eines Details aus Fig. 10;
- Fig. 12: eine vergrößerte Darstellung eines Details aus Fig. 10;
- Fig. 13: eine Ansicht der erfindungsgemäßen Basis analog Fig. 10, wobei sich die Verriegelungselemente in einem abweichenden Zustand befinden;
- Fig. 14: eine vergrößerte Ansicht eines Details aus Fig. 13;
- Fig. 15: eine vergrößerte Ansicht eines Details aus Fig. 13;

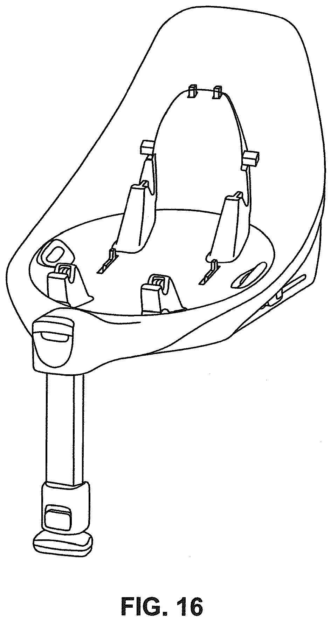

- Fig. 16: eine Schrägansicht analog Fig. 1.

In der nachfolgenden Beschreibung werden für gleiche und gleichwirkende Teile dieselben Bezugsziffern verwendet.

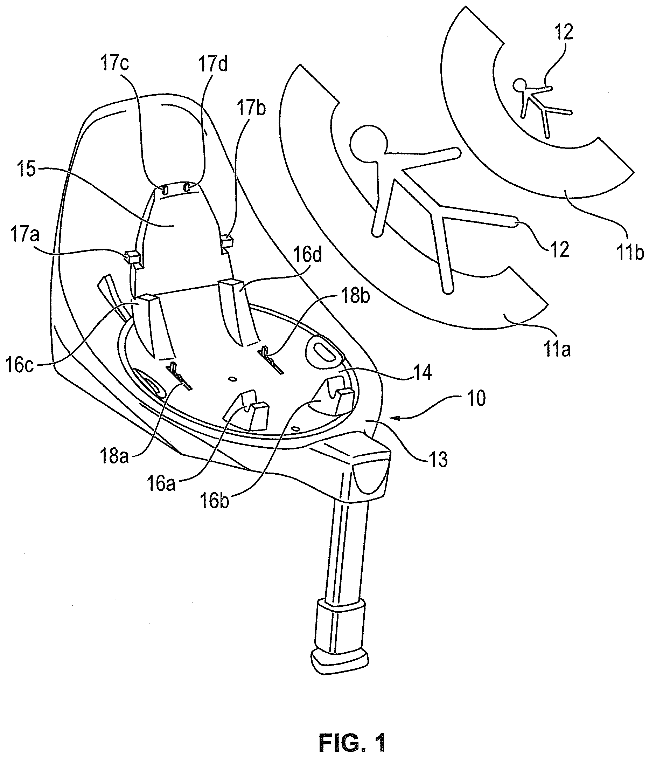

Fig. 1 zeigt eine Schrägansicht eines Kindersitzsystems umfassend eine Basis 10 sowie (schematisch angedeutet) ein Sitzelement 11a bzw. 11b, auf dem sich ein Kind 12 befinden kann. Das Sitzelement 11a ist für eine größeres Kind konfiguriert als das Sitzelement 11b. Die Basis 10 weist ein Sockelelement 13 sowie ein gegenüber dem Sockelelement 13 drehbares Drehelement 14 auf. Das Drehelement 14 kann grundsätzlich (abhängig von nachfolgend im Detail beschriebenen Bedingungen) in einem 360°-Winkel gegenüber dem Sockelelement 13 (um eine zumindest im Wesentllichen vertikale Rotationsachse) rotiert werden. Die Basis 10, vorzugsweise das Drehelement 14, weist eine Finne 15 auf, die von der Basis 10, vorzugsweise von dem Drehelement 14 nach oben ragt. Die Finne 15 ist so ausgebildet, dass sie zumindest ein Sitzelement, das auf der Basis montiert werden kann, beispielsweise eine Babyschale, entsprechend stützt und stabilisiert, so dass eine Tragestruktur des Sitzelementes 11 zumindest teilweise durch die Finne bereitgestellt wird. Dadurch kann Gewicht auf Seiten des Sitzelementes 11 eingespart werden.

Die Basis 10, insbesondere das Drehelement 14 weist Befestigungseinrichtungen 16a bis 16d auf. Die Befestigungseinrichtungen 16a, 16b können dabei eine am Sitzelement 11a/11b vorgesehene Stange aufnehmen. Auch die Befestigungseinrichtungen 16c, 16d können eine am Sitzelement 11a/11b vorgesehene Stange aufnehmen, so dass das Sitzelement 11a/11b auf der Basis 10, insbesondere dem Drehelement 14, montierbar ist. Vorzugsweise ist dabei bei sämtlichen für die Basis 10 vorgesehenen Sitzelementen 11a/11b nur eine Montage möglich, bei der das Kind von der Finne 15 wegblickt. Alternativ wäre es auch denkbar, dass aufgrund der Befestigungseinrichtung 16a, 16b einerseits, und 16c, 16d, andererseits, eine um 180° verdrehte Montage erlaubt ist (insbesondere dann kann die Finne 15 ggf. auch entfallen).

Nachdem die Befestigungseinrichtungen 16c, 16d unmittelbar benachbart zur Finne 15 ausgebildet sind, kann erreicht werden, dass das Sitzelement 11 entsprechend an der Finne (insbesondere an seiner Rückwand) anliegt. Alternativ kann die Finne auch in das Sitzelement (insbesondere eine Rückwand) eingeschoben sein und somit seine stabilisierende Wirkung entfalten.

Vorzugsweise ist die Finne 15 über mindestens 10 cm², weiter vorzugsweise mindestens 20 cm² in direktem Kontakt mit einem Sitzelement 11 (beispielsweise Babyschale), wenn dieses montiert ist.

Die Finne 15 kann zumindest im Wesentlichen vertikal, insbesondere in einem Winkel von nicht mehr als 30°, weiter vorzugsweise nicht mehr als 20° gegenüber der Vertikalen ausgerichtet sein. Insoweit die Ausrichtung schwankt, soll hierbei insbesondere eine Ausrichtung gelten, die sich durch eine Verbindungslinie zwischen oberen und unterem Ende der Finne ergibt.

Die Finne kann (leicht) bogenförmig verlaufen, insbesondere um möglichst gut an eine ebenfalls (leicht) bogenförmige Außenwand des Sitzelementes angepasst zu sein.

Weiterhin weist die Finne 15 seitliche Vorsprünge 17a, 17b und obere Vorsprünge 17c, 17d auf. Diese Vorsprünge sind vorzugsweise (im Inneren der Finne) miteinander verbunden, jedoch vorzugsweise gegenüber der Finne 15 bewegbar (also auch gegenüber der Basis 10 bewegbar).

Vorzugsweise erlauben die Vorsprünge 17a bis 17d in einer (oberen) Position eine vollständige Rotation des Sitzes und in einer zweiten (unteren) Position nur eine Rotation von zumindest einer rückwärts gerichteten Position des Sitzes in eine Ein- und Ausstiegsausrichtung (um 90° verdreht). Alternativ kann auch eine vollständige Blockade der Rotation in diesem Fall möglich sein.

Drückt ein Sitzelement (z. B. Babyschale), insbesondere in einer ggf. einzig möglichen (rückwärts gerichteten) Konfiguration gegenüber der Basis auf die Vorsprünge 17c, 17d, kann eine Rotation blockiert werden. Gleichzeitig kann eine Installation des Sitzelementes (der Babyschale) im vorwärts gerichteten Zustand wirksam verhindert werden, da die Vorsprünge nicht in die zweite Position überführt werden können und das Sitzelement (Babyschale) dadurch nicht ausreichend weit nach unten bewegt werden kann, um mit (nachfolgend noch zu beschreibenden) Verriegelungseinrichtungen des Sitzelementes gegenüber der Basis zusammenzuwirken. Dagegen kann ein anderes Sitzelement mit den Vorsprüngen 17a, 17b zusammenwirken, die von entsprechenden Elementen des weiteren Sitzelementes heruntergedrückt werden können, beispielsweise wenn die Kopfstütze oder ein Knopf (etc.) in eine entsprechende Position bewegt wird.

An der Basis 10, insbesondere dem Sockelelement 13 kann weiterhin ein Stützfuß 18 angeordnet sein.

In der Konfiguration gemäß Fig. 1 ist insbesondere ein erstes Sitzelement (in Vorwärts-Ausrichtung) montierbar, jedoch kein zweites Sitzelement, wobei das zweite Sitzelement vorzugsweise eine Babyschale ist und das erste Sitzelement ein Gruppe II/III-Kindersitz. In einer um 180° verdrehten Stellung des Drehelementes 14 gegenüber dem Sockelelement 13 ist hingegen (auch) eine Montage des zweiten Sitzelementes (Babyschale) möglich.

Nachfolgend werden Mechanismus zur Verriegelung des Drehelementes 14 gegenüber dem Sockelelement 13 beschrieben.

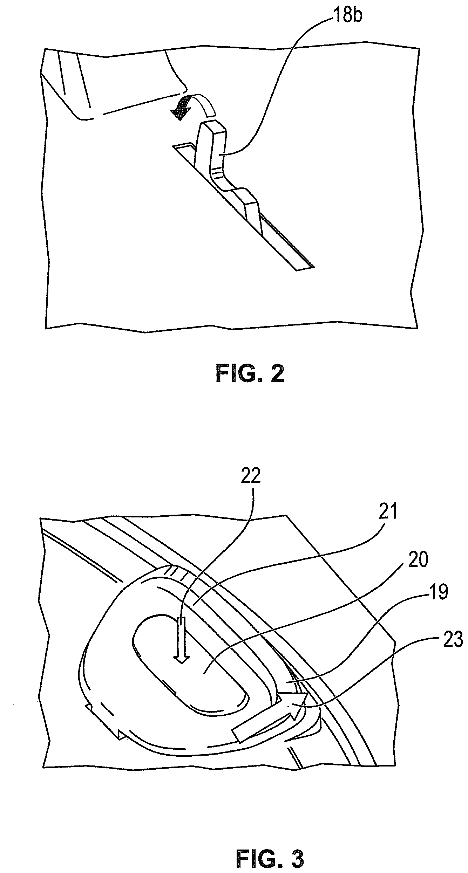

Dazu sind zunächst Verriegelungselemente 18a, 18b (siehe Fig. 1, vergrößert beispielsweise in Fig. 2) vorgesehen.

Diese können einerseits durch eine Handbetätigungseinrichtung 19, insbesondere umfassend einen Knopf 20 sowie einen Schieber bzw. Zieher 21 betätigt werden, wobei entsprechende Bewegungen durch Pfeile 22, 23 angedeutet werden (siehe Fig. 3).

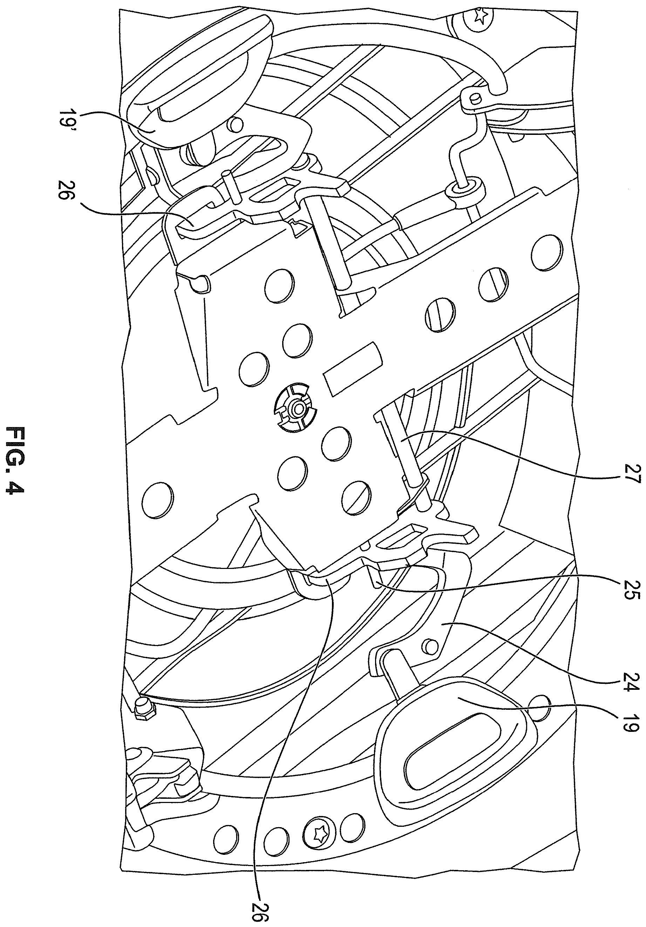

In Fig. 4 erkennt man, dass ein Ziehen/Schieben an dem Schieber bzw. Zieher 21 zur Folge hat, dass ein hakenförmiges Schrägelement 24 von unten gegen einen Stift 25 des Verriegelungselementes 18b drückt. Dadurch rotiert ein Rasthaken 26 des Riegelelementes 18b aus einer entsprechenden (in Fig. 4 nicht im Detail erkennbaren) Ausnehmung an dem Sockelelement 13. Nachdem das Verriegelungselement 18a mit dem Verriegelungselement 18b über eine Stange 27 verbunden ist, rotiert automatisch auch das Verriegelungselement 18a aus seiner arretierten Position heraus und die Rotation des Drehelementes 13 gegenüber dem Sockelelement 14 ist freigegeben. Analog kann diese Freigabe auch über eine (spiegelverkehrte) Betätigung einer Handbetätigungseinrichtung 19' (der Handbetätigungseinrichtung 19 gegenüberliegend) erfolgen.

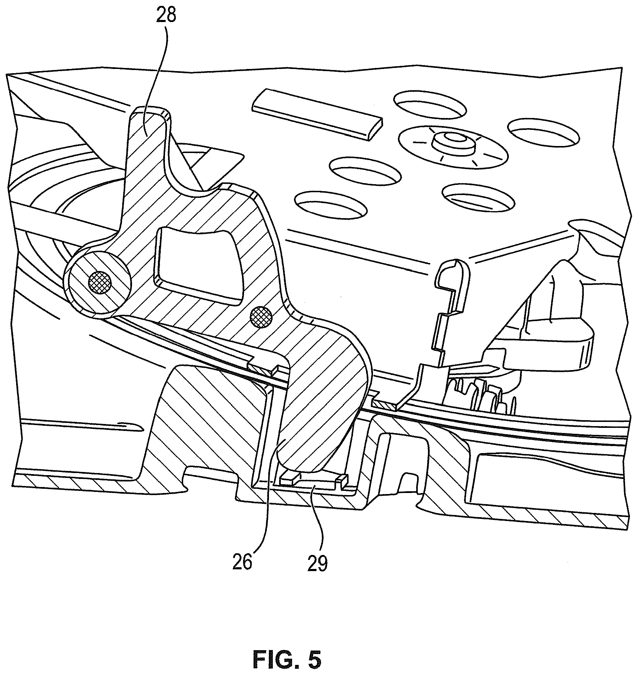

Eine alternative Betätigung für die Verriegelungseinrichtungen 18a, 18b kann so erfolgen, dass ein Sitzelement (insbesondere ein Gruppe II/III-Kindersitz) gegen einen Hebelarm 28 (siehe Fig. 5), bei einer bestimmten Konfiguration des Sitzelementes, drückt, so dass durch Bewegen des Hebelarmes 28 (in Fig. 5 einer Verschwenkung nach links) der Rasthaken aus den in Fig. 5 erkennbaren Ausnehmungen 29 herausgeführt wird. Hierbei kann das Sitzelement ggf. gleichzeitig auf beide (analog bzw. spiegelverkehrt ausgebildeten) Verriegelungselemente 18a und 18b wirken. Aufgrund der Stange 27 reicht jedoch ggf. auch ein Einwirken auf nur eines der Verriegelungselemente 18a oder 18b aus.

Wie in Fig. 1 erkennbar, weist das Drehelement 14 eine Abdeckung 29 auf. Eine (insbesondere metallische) Innenkonstruktion des Drehelementes 14, die insbesondere eine Innenkonstruktion der Finne und eine Innenkonstruktion der übrigen Bestandteile des Drehelementes umfasst, kann vorgesehen sein.

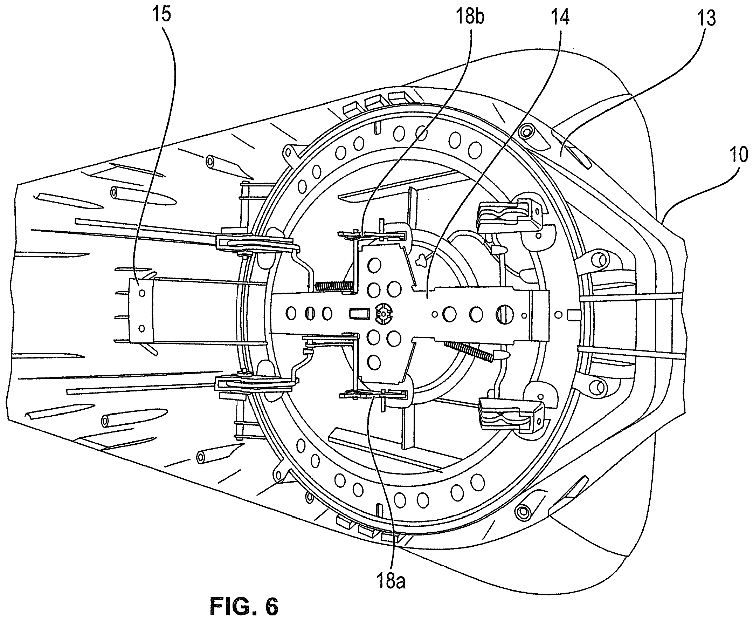

In Fig. 6 bis 15 sind noch weitere Ansichten der erfindungsgemäßen Basis gezeigt, wobei hier die Abdeckungsteile, insbesondere die Abdeckung 29 entfernt worden sind.

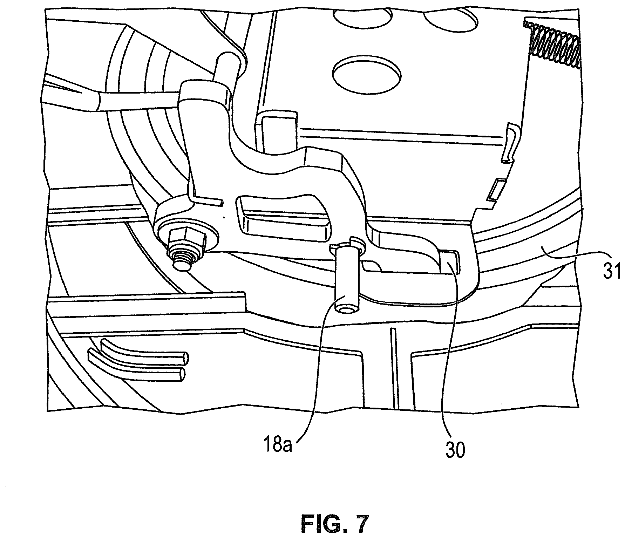

In Fig. 6 ist die Sitzbasis 10 in einer Vorwärts-Ausrichtung gezeigt, wobei die Verriegelungselemente 18a, 18b in einem verriegelten Zustand sind. In der Detailansicht gemäß Fig. 7 erkennt man eines der Verriegelungselemente, nämlich das Verriegelungselement 18a. Weiterhin ist ein optionales schlitzartiges Loch 30 zu sehen, das jedoch lediglich Bestandteil einer optionalen Blende 32 ist, die mit dem gesamten Drehelement 13 mitdreht. Die eigentliche Gegenstruktur ist ein (durch die Blende verdecktes) Loch in einem darunterliegenden Ring 31.

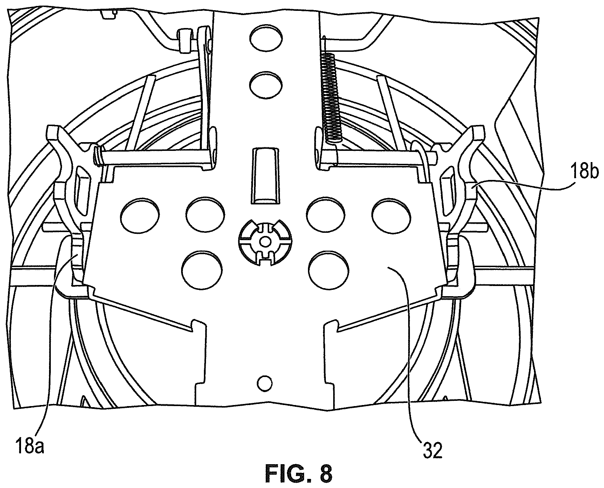

In Fig. 8 sind nochmals die Verriegelungselemente 18a, 18b zu sehen, wobei hier nochmals die Blende 32 (als insbesondere kreuzförmiges Element) zu sehen ist.

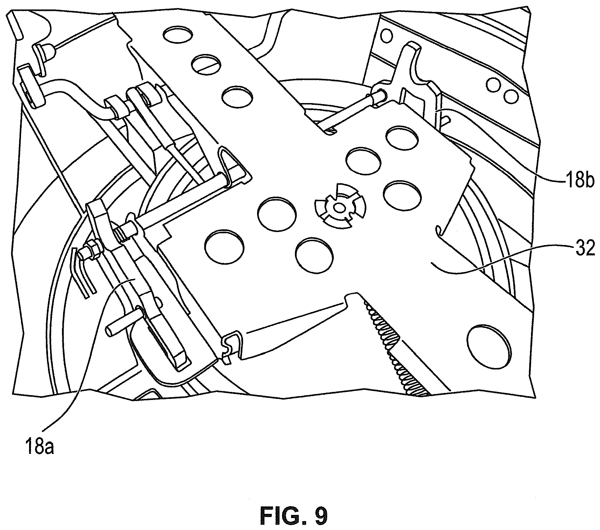

Fig. 9 zeigt eine Ansicht analog Fig. 8, jedoch aus einer anderen Perspektive.

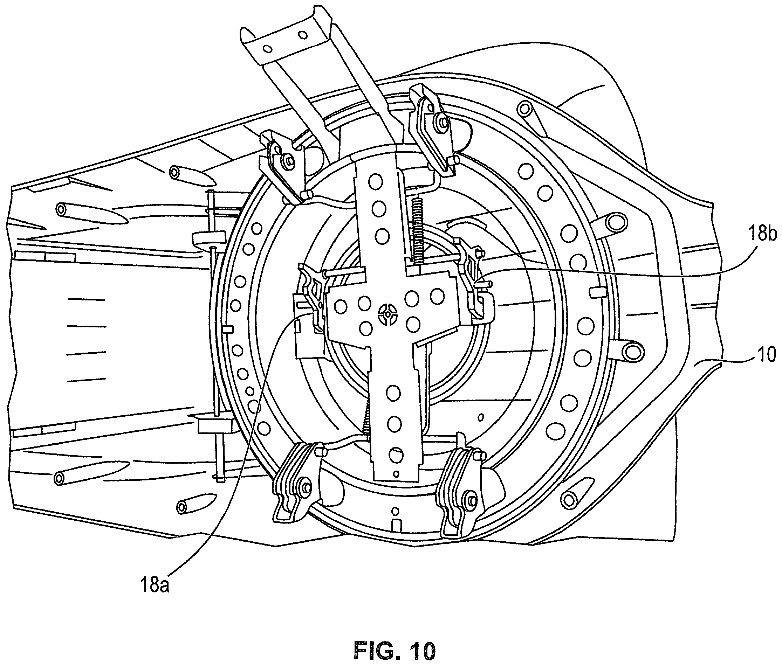

Fig. 10 zeigt eine weitere Übersicht der erfindungsgemäßen Basis 10 (ohne Abdeckungen) in einer Ein- bzw. Ausstiegsausrichtung, wobei die Verriegelungselemente 18a, 18b im entriegelten Zustand sind.

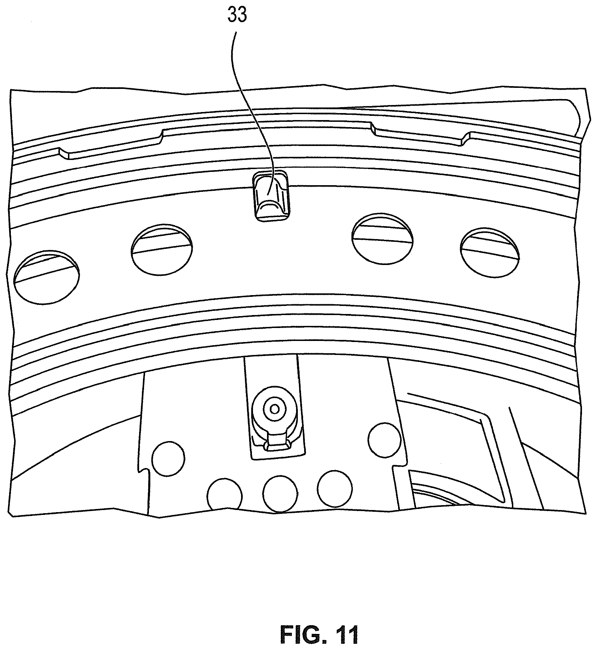

In Fig. 11 erkennt man einen Pin 33, der in der Konfiguration gemäß Fig. 10 einen Softlock ausbildet. Man erkennt, dass eine (obere) Fläche des Pins 33 abgerundet ist, so dass die Festlegung (Softlock) durch seitliche Kräfte (infolge einer Rotation des Drehelementes 14 gegenüber dem Sockelelement 13) überwunden werden kann.

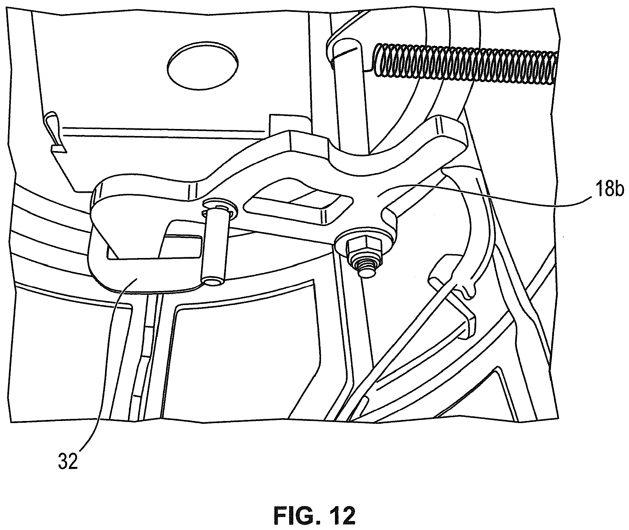

In der Detailansicht gemäß Fig. 12 erkennt man das Verriegelungselement 18b in einem entriegelten Zustand. Das Verriegelungselement 18b greift zwar vorzugsweise durch die Blende 32, liegt aber auf dem Ring 31 auf. Im Vergleich zu Fig. 7 ist das Verriegelungselement 18b deutlich verschwenkt.

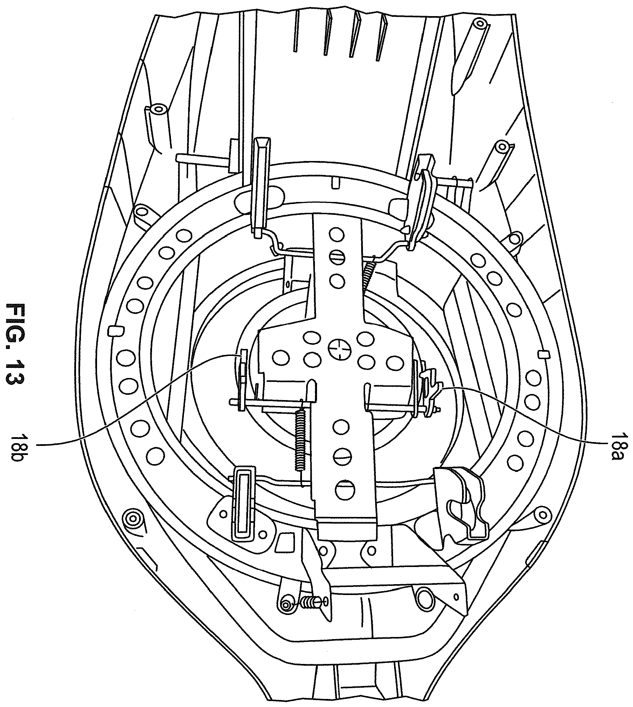

Fig. 13 zeigt eine Übersicht der Basis 10 in einer Rückwärts-Ausrichtung, wobei die Verriegelungselemente 18a, 18b in einem verriegelten Zustand sind.

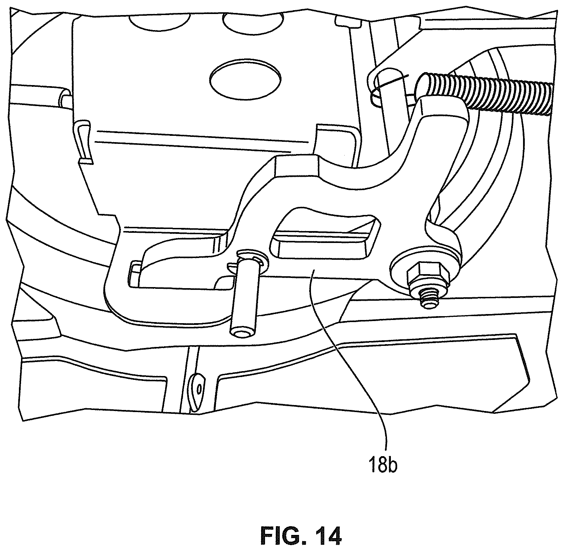

Fig. 14 zeigt eine Detailansicht aus Fig. 13, nämlich das Verriegelungselement 18b in einer verriegelten Position.

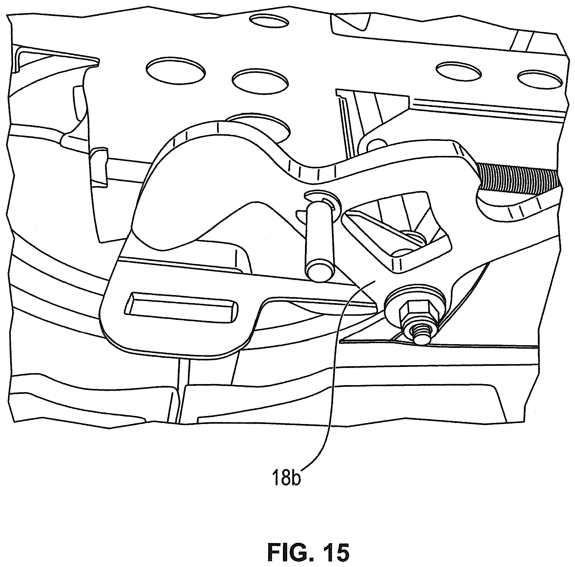

Fig. 15 zeigt eine Ansicht analog Fig. 14, wobei abweichend von Fig. 14 das Verriegelungselement 18b in einer (deutlich) entriegelten Stellung ist und den Blick auf die Gegenstruktur (das Loch im Ring 31 unterhalb der Blende 32) freigibt.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmanng geläufig.

### Bezugszeichen

- 10: Basis
- 11: Sitzelement
- 12: Kind
- 13: Sockelelement
- 14: Deckelelement
- 15: Finne
- 16a: Befestigungseinrichtung
- 16b: Befestigungseinrichtung
- 16c: Befestigungseinrichtung
- 16d: Befestigungseinrichtung
- 17a: Vorsprung
- 17b: Vorsprung
- 17c: Vorsprung
- 17d: Vorsprung
- 18a: Verriegelungseinrichtung (Verriegelungselement)
- 18b: Verriegelungseinrichtung (Verriegelungselement)
- 18: Stützfuß
- 19: Handbetätigungseinrichtung
- 20: Knopf
- 21: Schieber bzw. Zieher
- 22: Pfeil
- 23: Pfeil
- 24: Schrägelement
- 25: Stift
- 26: Rasthaken
- 27: Stange
- 28: Hebelarm
- 29: Ausnehmung
- 30: Loch
- 31: Ring
- 32: Blende
- 33: Pin

## Patentansprüche

1. Kindersitzsystem, umfassend zumindest ein erstes Sitzelement (11a), ein zweites Sitzelement (11b) und eine, auf einem Fahrzeugsitz anbringbare, Basis (10),
wobei das erste und/oder das zweite Sitzelement (11a, 11b) gegenüber der Basis (10) oder einem Sockelelement (13) der Basis (10) einstellbar ist, insbesondere von einer ersten Ausrichtung in eine zweite, von der ersten Ausrichtung abweichende, Ausrichtung rotierbar ist,
wobei eine Handbetätigungseinrichtung (19) für eine Verriegelungseinrichtung (18a, 18b) zur Freigabe und/oder Blockierung der Einstellung, insbesondere der Rotation zugänglich ist, wenn das zweite Sitzelement (11b) auf der Basis (10) montiert ist, nicht aber zugänglich ist, wenn das erste Sitzelement (11a) auf der Basis (10) montiert ist.

2. Kindersitzsystem nach Anspruch 1,
wobei die Basis (10) das Sockelelement (13) sowie ein Drehelement (14) aufweist,
wobei zumindest das Drehelement (14) mindestens eine Befestigungseinrichtung (18a-18d) zur Befestigung des ersten Sitzelementes (11a) aufweist,
wobei das Drehelement (14) auf dem Sockelelement (13) rotierbar angeordnet ist derart, dass das Drehelement (14) zusammen mit dem ersten Sitzelement (11a) gegenüber dem Sockelelement (13) zur Änderung einer Ausrichtung des ersten Sitzelementes (11a) rotierbar ist, wobei das erste Sitzelement (11a) von der Basis (10) entfernbar ist.

3. Kindersitzsystem nach Anspruch 1 oder 2,
wobei zumindest das erste Sitzelement (11a) gegenüber der Basis (10) oder dem Sockelelement (13) der Basis (10) von einer ersten Ausrichtung in eine zweite, von der ersten Ausrichtung abweichende, Ausrichtung rotierbar ist,
wobei eine entsprechende Rotation des zweiten Sitzelementes (11b) gegenüber der Basis (10) verhindert ist oder zumindest im Vergleich zur Rotation des ersten Sitzelementes (11a) eingeschränkt ist.

4. Kindersitzsystem nach einem der vorhergehenden Ansprüche, wobei die Basis (10) ein Stütz- und/oder Stabilisierungselement, insbesondere eine Stütz- und/oder Stabilisierungsfinne (15) aufweist, zum Stützen und/oder Stabilisieren des Sitzelementes, wenn sich dieses auf der Basis (10) befindet.

5. Kindersitzsystem nach einem der vorhergehenden Ansprüche,
**dadurch gekennzeichnet, dass**
mindestens zwei verschiedene Sitzelemente (11a, 11b), insbesondere eine Babyschale, vorzugsweise als zweites Sitzelement (11b), einerseits, und ein Gruppe I-, II-, und/oder III-Sitzelement, vorzugsweise als erstes Sitzelement (11a), andererseits, auf der Basis montierbar sind.

6. Kindersitzsystem nach einem der vorhergehenden Ansprüche,
**dadurch gekennzeichnet, dass**
die Basis (10), insbesondere das Sockelelement (13), mindestens eine Verankerungseinrichtung, umfassend insbesondere mindestens einen Verankerungsarm und/oder eine Isofix-Verankerungseinrichtung und/oder eine Latch-System-Verankerungseinrichtung, zur lösbaren Befestigung der Basis (10) auf einem Fahrzeugsitz, und/oder einen Stützfuß (18) und/oder mindestens eine Anti-Rebound-Einrichtung, vorzugsweise Anti-Rebound-Finne und/oder Anti-Rebound-Bügel umfasst und/oder die Basis (10), insbesondere das Sockelelement (13) und/oder Drehelement (14), mindestens eine Gurtführungseinrichtung und/oder eine Indikatoreinrichtung zur Indikation einer bestimmten Konfiguration, insbesondere Ausrichtung des Sitzelementes (11a, 11b) gegenüber der Basis (10) und/oder des Drehelementes (14) gegenüber dem Sockelelement (13) umfasst.

7. Kindersitzsystem nach einem der vorhergehenden Ansprüche,
**dadurch gekennzeichnet, dass**
die Basis (10), insbesondere das Drehelement (14), mindestens eine Befestigungseinrichtung (18a-18d) zur Befestigung eines Sitzelementes oder mindestens zwei Befestigungseinrichtungen aufweist, wobei ggf. eine erste Befestigungseinrichtung zur Befestigung eines/des ersten Sitzelements ausgebildet ist und eine zweite Befestigungseinrichtung zur Befestigung eines/des zweiten Sitzelementes.

8. Kindersitzsystem nach einem der vorhergehenden Ansprüche,
**dadurch gekennzeichnet, dass**
das erste und/oder zweite Sitzelement, ggf. einschließlich Drehelement (14), in mindestens oder genau zwei verschiedenen Ausrichtungen, oder in mindestens vier oder genau vier verschiedenen Ausrichtung arretierbar ist, insbesondere derart, dass die Arretierung nur durch die Betätigung einer Verriegelungseinrichtung lösbar ist und/oder dass das erste und/oder zweite Sitzelement, ggf. einschließlich Drehelement (14), in mindestens oder genau zwei verschiedenen Ausrichtungen festlegbar ist, insbesondere derart, dass die Festlegung ausschließlich bzw. alleine durch eine Rotation des ersten bzw. zweiten Sitzelementes, ggf. einschließlich Drehelement (14), aufhebbar ist.

9. Kindersitzsystem nach einem der vorhergehenden Ansprüche,
**dadurch gekennzeichnet, dass**
mindestens eine erste und/oder mindestens eine zweite Verriegelungseinrichtung zum Lösen und/oder Herstellen einer Arretierung einer Ausrichtung des Sitzelementes und/oder des Drehelementes (14), vorgesehen ist/sind, wobei die erste und/oder zweite Verriegelungseinrichtung vorzugsweise
an einer Oberseite der Basis (10), insbesondere in einem Bereich, der vom ersten und/oder einem/dem zweiten Sitzelement im montierten Zustand überdeckt ist, vorzugsweise von der jeweiligen Oberseite vorstehend, angeordnet ist/sind und/oder
manuell, vorzugsweise über eine/die Handbetätigungseinrichtung, insbesondere über eine manuelle Schiebe-, Zug-, Druck- und/oder Drehbetätigungseinrichtung, betätigbar ist/sind und/oder durch Verstellen einer Neigung des ersten und/oder zweiten Sitzelementes, insbesondere nur durch Verstellen einer Neigung des ersten Sitzelementes, betätigbar ist/sind und/oder zum Lösen und/oder Herstellen einer Arretierung rotierbar und/oder translatorisch bewegbar ist/sind und/oder
mittels einer Federeinrichtung in Richtung eines arretierten Zustandes vorgespannt ist/sind,
wobei das Lösen der Arretierung vorzugsweise sowohl über eine Betätigung der ersten als auch der zweiten Verriegelungseinrichtung durchführbar ist, wobei die Verriegelungseinrichtungen und/oder die Betätigungseinrichtungen selbst dazu, weiter vorzugsweise, entsprechend gekoppelt sind und/oder
wobei erste und zweite Verriegelungseinrichtung spiegelsymmetrisch zueinander angeordnet bzw. ausgebildet sind.

10. Kindersitzsystem nach einem der vorhergehenden Ansprüche,
**dadurch gekennzeichnet, dass**
mindestens eine Verriegelungseinrichtung und/oder mindestens eine erste Betätigungseinrichtung, insbesondere eine/die (erste) Handbetätigungseinrichtung, zum Lösen und/oder Herstellen einer Arretierung der Ausrichtung des Sitzelementes und/oder des Drehelementes (14), in einem ersten seitlichen Bereich der Basis (10), insbesondere des Sockel- (13) und/oder Drehelementes (14), angeordnet ist und ggf. eine entsprechende zweite Betätigungseinrichtung in einem zweiten, dem ersten Bereich gegenüberliegenden, seitlichen Bereich der Basis (10), insbesondere des Sockel- (13) und/oder Drehelement es (14), angeordnet ist.

11. Kindersitzsystem nach einem der vorhergehenden Ansprüche,
**dadurch gekennzeichnet, dass**
eine fünfte und/oder sechste Verriegelungseinrichtung vorgesehen ist und/oder dass eine Kopfstütze (13) des Sitzelementes in der ersten Ausrichtung in verschiedene Konfigurationen, insbesondere betreffend eine Höhe der Kopfstütze (13), einstellbar ist,
wobei vorzugsweise die fünfte Verriegelungseinrichtung (19, 40) vorgesehen und ausgebildet ist, bei einem Teil der in der ersten Ausrichtung möglichen Konfigurationen zu verhindern, dass das Sitzelement (10) von der ersten in die zweite Ausrichtung rotierbar ist und/oder
wobei vorzugsweise die sechste Verriegelungseinrichtung (19, 27) vorgesehen und ausgebildet ist, zu verhindern, dass ein Teil von den in der ersten Ausrichtung möglichen Konfigurationen in der zweiten Ausrichtung einstellbar ist.

12. Kindersitzsystem nach einem der vorhergehenden Ansprüche,
**dadurch gekennzeichnet, dass**
die erste Ausrichtung einer Konfiguration des Sitzelementes entspricht, bei der das Sitzelement (11a, 11b) rückwärts gerichtet ist und/oder die zweite Ausrichtung einer Konfiguration des Kindersitzes entspricht, bei der das Sitzelement (11a, 11b) vorwärts gerichtet ist und/oder dass das Sitzelement in eine dritte Ausrichtung rotierbar ist, wobei die dritte Ausrichtung vorzugsweise zwischen der ersten und der zweiten Ausrichtung liegt, insbesondere gegenüber der ersten und/oder zweiten Ausrichtung um 90° rotiert ist.

13. Kindersitzsystem nach einem der vorhergehenden Ansprüche,
**dadurch gekennzeichnet, dass**
eine Verriegelungseinrichtung, insbesondere die Verriegelungseinrichtung (18a, 18b) nach Anspruch 1, zur Freigabe und/oder Blockierung der Einstellung, insbesondere Rotation vorgesehen ist, die durch das erste Sitzelement (11a), insbesondere ein Verändern einer Neigung des ersten Sitzelementes (11a), nicht aber durch das zweite Sitzelement (11b), insbesondere nicht durch Verändern einer Neigung des zweiten Sitzelementes (11b), das ggf. hinsichtlich seiner Neigung nicht veränderbar ist, betätigbar ist.

## Claims

1. Child seat system comprising at least one first seat element (11a), a second seat element (11b) and a base (10) mountable on a vehicle seat, wherein the first and/or the second seat element (11a, 11b) is adjustable relative to the base (10) or a base element (13) of the base (10), in particular is rotatable from a first orientation to a second orientation different from the first orientation,
wherein a manual actuation means (19) for a locking means (18a, 18b) for releasing and/or blocking said adjustment, in particular said rotation, is accessible when said second seat element (11b) is mounted on said base (10), but is not accessible when said first seat element (11a) is mounted on said base (10).

2. Child seat system according to claim 1,
wherein said base (10) comprises said base element (13) and a rotary element (14),
wherein at least said rotary element (14) comprises at least one fastening means (18a-18d) for fastening said first seat member (11a),
wherein the rotary element (14) is rotatably arranged on the base element (13) such that the rotary element (14) is rotatable together with the first seat element (11a) relative to the base element (13) for changing an orientation of the first seat element (11a),
wherein the first seat element (11a) is removable from the base (10).

3. A child seat system according to claim 1 or 2,
wherein at least the first seat element (11a) is rotatable relative to the base (10) or the base element (13) of the base (10) from a first orientation to a second orientation different from the first orientation,
wherein a corresponding rotation of the second seat element (11b) relative to the base (10) is prevented or at least restricted compared to the rotation of the first seat element (11a).

4. Child seat system according to any one of the preceding claims, wherein the base (10) comprises a supporting and/or stabilising element, in particular a supporting and/or stabilising fin (15), for supporting and/or stabilising the seat element when it is located on the base (10).

5. Child seat system according to any one of the preceding claims,
**characterized in that** at least two different seat elements (11a, 11b), in particular a baby seat, preferably as the second seat element (11b), on the one hand, and a group I, II and/or III seat element, preferably as the first seat element (11a), on the other hand, can be mounted on the base.

6. Child seat system according to any one of the preceding claims,
**characterized in that**
the base (10), in particular the base element (13), comprises at least one anchoring device, comprising in particular at least one anchoring arm and/or an Isofix anchoring device and/or a latch system anchoring device, for releasably fastening the base (10) to a vehicle seat, and/or a support foot (18) and/or
at least one anti-rebound device, preferably anti-rebound fin and/or anti-rebound bracket, and/or
the base (10), in particular the base element (13) and/or rotary element (14), comprises at least one belt guide device and/or an indicator device for indicating a specific configuration, in particular orientation, of the seat element (11a, 11b) relative to the base (10) and/or of the rotary element (14) relative to the base element (13).

7. Child seat system according to any one of the preceding claims,
**characterized in that** the base (10), in particular the rotary element (14), has at least one fastening device (18a-18d) for fastening a seat element or at least two fastening devices, wherein, if applicable, a first fastening device is designed for fastening a/the first seat element and a second fastening device is designed for fastening a/the second seat element.

8. Child seat system according to any one of the preceding claims, **characterized in that** the first and/or second seat element, possibly including the rotating element (14), can be locked in at least or exactly two different orientations, or in at least four or exactly four different orientations, in particular in such a way that the locking can only be released by actuating a locking device, and/or
**in that** the first and/or second seat element, possibly including the rotary element (14), can be fixed in at least or exactly two different orientations, in particular in such a way that the fixing can be released exclusively or solely by a rotation of the first or second seat element, possibly including the rotary element (14).

9. Child seat system according to one of the preceding claims, **characterized in that** at least one first and/or at least one second locking device is/are provided for releasing and/or producing a locking of an orientation of the seat element and/or of the rotary element (14), wherein the first and/or second locking device is/are preferably arranged
on an upper side of the base (10), in particular in an area which is covered by the first and/or a/the second seat element in the assembled state, preferably projecting from the respective upper side, and/or manually, preferably via a manual actuating device, in particular via a manual pushing, pulling, pressing and/or rotating actuating device, and/or
by adjusting an inclination of the first and/or second seat element, in particular only by adjusting an inclination of the first seat element, and/or
is/are rotatable and/or translationally movable for releasing and/or
establishing a locking and/or
is/are biased in the direction of a locked state by means of a spring device,
wherein the release of the locking can preferably be carried out via an actuation of both the first and the second locking device, wherein the locking devices and/or the actuating devices themselves are, further preferably, coupled accordingly for this purpose, and/or
wherein the first and second locking devices are arranged or designed mirror-symmetrically to one another.

10. Child seat system according to one of the preceding claims, **characterized in that** at least one locking device and/or at least one first actuating device, in particular a/the (first) manual actuating device, for releasing and/or producing a locking of the orientation of the seat element and/or of the rotary element (14), is arranged in a first lateral region of the base (10), in particular of the base (13) and/or rotary element (14), and optionally a corresponding second actuating device is arranged in a second lateral region of the base (10), in particular of the base (13) and/or rotary element (14), opposite the first region.

11. Child seat system according to one of the preceding claims, **characterized in that** a fifth and/or sixth locking device is provided and/or that a headrest (13) of the seat element in the first orientation is adjustable into different configurations, in particular concerning a height of the headrest (13),
wherein preferably the fifth locking device (19, 40) is provided and designed to prevent the seat element (10) from being rotatable from the first to the second orientation in some of the configurations possible in the first orientation, and/or
wherein preferably the sixth locking means (19, 27) is provided and adapted to prevent a portion of the configurations possible in the first orientation from being adjustable in the second orientation.

12. Child seat system according to one of the preceding claims, **characterized in that** the first orientation corresponds to a configuration of the seat element in which the seat element (11a, 11b) is directed backwards and/or the second orientation corresponds to a configuration of the child seat in which the seat element (11a, 11b) is directed forwards, and/or in that the seat element can be rotated into a third orientation, the third orientation preferably lying between the first and the second orientation, in particular being rotated through 90° with respect to the first and/or second orientation.

13. Child seat system according to one of the preceding claims, **characterized in that** a locking device, in particular the locking device (18a, 18b) according to claim 1, is provided for releasing and/or blocking the adjustment, in particular rotation, which can be actuated by the first seat element (11a), in particular by changing an inclination of the first seat element (11a), but not by the second seat element (11b), in particular not by changing an inclination of the second seat element (11b), which may not be changeable in terms of its inclination.

## Revendications

1. Système de siège pour enfant comprenant au moins un premier élément de siège (11a), un deuxième élément de siège (11b) et une base (10) pouvant être posée sur un siège de véhicule,
dans lequel le premier et/ou le deuxième élément de siège (11a, 11b) sont réglables par rapport à la base (10) ou à un élément de socle (13) de la base (10), en particulier capables de rotation d'une première orientation à une deuxième orientation différente de la première orientation,
dans lequel un dispositif d'actionnement manuel (19) pour un dispositif de verrouillage (18a, 18b) est accessible pour débloquer et/ou bloquer le réglage, en particulier la rotation, quand le deuxième élément de siège (11b) est monté sur la base (10), mais n'est pas accessible quand le premier élément de siège (11a) est monté sur la base (10).

2. Système de siège pour enfant selon la revendication 1, dans lequel la base (10) comporte l'élément de socle (13) ainsi qu'un élément pivotant (14),
dans lequel l'élément pivotant (14), au moins, comporte au moins un dispositif de fixation (18a-18d) pour la fixation du premier élément de siège (11a),
dans lequel l'élément pivotant (14) est disposé avec possibilité de rotation sur l'élément de socle (13), de telle manière que l'élément pivotant (14) puisse effectuer une rotation en même temps que le premier élément de siège (11a) par rapport à l'élément de socle (13) pour modifier une orientation du premier élément de siège (11a), le premier élément de siège (11a) pouvant être enlevé de la base (10).

3. Système de siège pour enfant selon la revendication 1 ou 2, dans lequel le premier élément de siège (11a), au moins, est capable de rotation par rapport à la base (10) ou à l'élément de socle (13) de la base (10) d'une première orientation à une deuxième orientation différente de la première orientation,
une rotation correspondante du deuxième élément de siège (11b) par rapport à la base (10) étant empêchée ou au moins limitée par rapport à la rotation du premier élément de siège (11a).

4. Système de siège pour enfant selon l'une des revendications précédentes, dans lequel la base (10) comporte un élément d'appui et/ou de stabilisation, en particulier une ailette d'appui et/ou de stabilisation (15), pour soutenir et/ou stabiliser l'élément de siège quand celui-ci se trouve sur la base (10).

5. Système de siège pour enfant selon l'une des revendications précédentes, **caractérisé en ce qu'**au moins deux éléments de siège (11a, 11b) différents peuvent être montés sur la base, en particulier une coque pour bébé, de préférence comme deuxième élément de siège (1 1b), d'une part, et un élément de siège de groupe I, II et/ou III, de préférence comme premier élément de siège (11a), d'autre part.

6. Système de siège pour enfant selon l'une des revendications précédentes, **caractérisé en ce que** la base (10), en particulier l'élément de socle (13), comprend au moins un dispositif d'ancrage, comprenant en particulier au moins un bras d'ancrage et/ou un dispositif d'ancrage Isofix et/ou un dispositif d'ancrage Latch System, en vue de la fixation pouvant être défaite de la base (10) sur un siège de véhicule, et/ou un pied d'appui (18) et/ou comprend au moins un dispositif antirebond, de préférence une ailette antirebond et/ou un étrier antirebond, et/ou
la base (10), en particulier l'élément de socle (13) et/ou l'élément pivotant (14), comprend au moins un dispositif de guidage de ceinture et/ou un dispositif indicateur pour indiquer une certaine configuration, en particulier une orientation, de l'élément de siège (11a, 11b) par rapport à la base (10) et/ou de l'élément pivotant (14) par rapport à l'élément de socle (13).

7. Système de siège pour enfant selon l'une des revendications précédentes, **caractérisé en ce que** la base (10), en particulier l'élément pivotant (14), comporte au moins un dispositif de fixation (18a-18d) pour la fixation d'un élément de siège ou d'au moins deux dispositifs de fixation, un premier dispositif de fixation étant éventuellement conformé en vue de la fixation d'un/du premier élément de siège et un deuxième dispositif de fixation en vue de la fixation d'un/du deuxième élément de siège.

8. Système de siège pour enfant selon l'une des revendications précédentes, **caractérisé en ce que** le premier et/ou le deuxième élément de siège, y compris éventuellement l'élément pivotant (14), peuvent être bloqués dans au moins deux ou exactement deux orientations différentes ou dans au moins quatre ou exactement quatre orientations différentes, en particulier de telle manière que le blocage ne puisse être défait que par l'actionnement d'un dispositif de verrouillage, et/ou
**en ce que** le premier et/ou le deuxième élément de siège, y compris éventuellement l'élément pivotant (14), puissent être fixés dans au moins deux ou exactement deux orientations différentes, en particulier de telle manière que la fixation puisse être défaite exclusivement ou uniquement par une rotation du premier élément de siège ou du deuxième, y compris éventuellement l'élément pivotant (14).

9. Système de siège pour enfant selon l'une des revendications précédentes, **caractérisé en ce qu'**au moins un premier et/ou au moins un deuxième dispositif de verrouillage sont prévus pour défaire et/ou établir un blocage d'une orientation de l'élément de siège et/ou de l'élément pivotant (14), le premier et/ou le deuxième dispositif de verrouillage
étant de préférence disposés sur une face supérieure de la base (10), en particulier dans une zone recouverte par le premier et/ou un/le deuxième élément de siège dans l'état monté, de préférence en dépassant de la face supérieure correspondante, et/ou
pouvant être actionnés manuellement, de préférence par un/le dispositif d'actionnement manuel, en particulier par un dispositif manuel d'actionnement par poussée, traction, pression et/ou rotation, et/ou
pouvant être actionnés par le changement d'une inclinaison du premier et/ou deuxième élément de siège, en particulier seulement par le changement d'une inclinaison du premier élément de siège, et/ou
pouvant être tournés et/ou déplacés en translation pour défaire et/ou établir un blocage et/ou
étant précontraints au moyen d'un dispositif de ressort dans la direction d'un état bloqué, le blocage pouvant de préférence être défait par un actionnement du premier dispositif de verrouillage aussi bien que du deuxième, les dispositifs de verrouillage et/ou les dispositifs d'actionnement eux-mêmes étant en outre de préférence couplés de façon correspondante et/ou
les premier et deuxième dispositifs de verrouillage étant disposés ou conformés de façon symétrique en miroir.

10. Système de siège pour enfant selon l'une des revendications précédentes, **caractérisé en ce qu'**au moins un dispositif de verrouillage et/ou au moins un premier dispositif d'actionnement, en particulier un/le (premier) dispositif d'actionnement manuel, sont disposés de façon à défaire et/ou à établir un blocage de l'orientation de l'élément de siège et/ou de l'élément pivotant (14) dans une première région latérale de la base (10), en particulier de l'élément de socle (13) et/ou de l'élément pivotant (14), et un deuxième dispositif d'actionnement correspondant est éventuellement disposé dans une deuxième région latérale de la base (10) située en face de la première région, en particulier de l'élément de socle (13) et/ou de l'élément pivotant (14).

11. Système de siège pour enfant selon l'une des revendications précédentes, **caractérisé en ce qu'**un cinquième dispositif de verrouillage et/ou un sixième sont prévus et/ou **en ce qu'**un appuie-tête (13) de l'élément de siège peut être réglé dans différentes configurations dans la première orientation, en particulier en ce qui concerne une hauteur de l'appuie-tête (13),
le cinquième dispositif de verrouillage (19, 40) étant de préférence prévu et conçu pour empêcher, dans une partie des configurations possibles dans la première orientation, que l'élément de siège (10) puisse tourner de la première orientation à la deuxième et/ou
dans lequel le sixième dispositif de verrouillage (19, 27) étant de préférence prévu et conformé pour empêcher qu'une partie des configurations possibles dans la première orientation puissent être réglées dans la deuxième orientation.

12. Système de siège pour enfant selon l'une des revendications précédentes, **caractérisé en ce que** la première orientation correspond à une configuration de l'élément de siège dans laquelle l'élément de siège (11a, 11b) est orienté vers l'arrière et/ou la deuxième orientation correspond à une configuration du siège pour enfant dans laquelle l'élément de siège (11a, 11b) est orienté vers l'avant et/ou
**en ce que** l'élément de siège peut être tourné dans une troisième orientation, laquelle troisième orientation se trouve de préférence entre la première orientation et la deuxième, en particulier est tournée de 90° par rapport à la première orientation et/ou à la deuxième.

13. Système de siège pour enfant selon l'une des revendications précédentes, **caractérisé en ce qu'**un dispositif de verrouillage, en particulier le dispositif de verrouillage (18a, 18b) selon la revendication 1, est prévu pour débloquer et/ou bloquer le réglage, en particulier la rotation, et peut être actionné par le premier élément de siège (11a), en particulier par un changement d'inclinaison du premier élément de siège (11a), mais pas par le deuxième élément de siège (11b), en particulier pas par un changement d'inclinaison du deuxième élément de siège (11b) dont l'inclinaison peut éventuellement ne pas être modifiable.
